(19) Europäisches Patentamt
European Patent Office
Office européen des brevets

(11) **EP 4 227 276 A1**

(12) **EUROPEAN PATENT APPLICATION**
published in accordance with Art. 153(4) EPC

(43) Date of publication:
**16.08.2023 Bulletin 2023/33**

(21) Application number: **21877770.4**

(22) Date of filing: **08.10.2021**

(51) International Patent Classification (IPC):
**C03C 10/02** *(2006.01)*     **H01B 3/12** *(2006.01)*
**H01M 10/0562** *(2010.01)*     **H01B 1/10** *(2006.01)*

(52) Cooperative Patent Classification (CPC):
**C03C 10/00; H01B 1/10; H01B 3/12;**
**H01M 10/0562;** Y02E 60/10

(86) International application number:
**PCT/JP2021/037459**

(87) International publication number:
**WO 2022/075471 (14.04.2022 Gazette 2022/15)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **09.10.2020 JP 2020171297**

(71) Applicant: **Idemitsu Kosan Co., Ltd
Tokyo 100-8321 (JP)**

(72) Inventors:
• **TERAI, Kota
Sodegaura-shi, Chiba 299-0293 (JP)**

• **KONDO, Katsuhito
Sodegaura-shi, Chiba 299-0293 (JP)**
• **MAKINO, Takeshi
Sodegaura-shi, Chiba 299-0293 (JP)**
• **SATO, Atsushi
Sodegaura-shi, Chiba 299-0293 (JP)**
• **HIGUCHI, Hiroyuki
Sodegaura-shi, Chiba 299-0293 (JP)**

(74) Representative: **Vossius & Partner
Patentanwälte Rechtsanwälte mbB
Siebertstraße 3
81675 München (DE)**

(54) **SULFIDE SOLID ELECTROLYTE GLASS CERAMIC AND MANUFACTURING METHOD FOR SAME**

(57)     An object of the present invention is to provide sulfide solid electrolyte glass ceramics that have a high ionic conductivity and an enhanced water resistance, and is also to provide a method of producing the sulfide solid electrolyte glass ceramics. Sulfide solid electrolyte glass ceramics that have peaks at 20.2° and 23.6° in an X-ray diffractometry (XRD) using the CuKa line, a crystallite diameter of 30 nm or more, and a $P_2S_6^{4-}$ phosphorus proportion obtained by a solid $^{31}P$-NMR spectroscopy of 4.5% by mol or less, and a method of producing the sulfide solid electrolyte glass ceramics are provided.

EP 4 227 276 A1

**Description**

Technical Field

The present invention relates to sulfide solid electrolyte glass ceramics and a method of producing the same.

Background Art

With the rapid spread of information-related instruments, and communication instruments, such as personal computers, video cameras, and mobile phones, in recent years, the development of batteries utilized as power sources therefor is considered to be important. While the batteries applied to the purpose have used an electrolytic solution containing a flammable organic solvent, development of a battery that has a solid electrolyte layer in place of the electrolytic solution is being made since the fully solid battery using no flammable organic solvent inside the battery can simplify the safety system and is excellent in production cost and productivity.

The known solid electrolytes that are used in the solid electrolyte layer include a sulfide solid electrolyte, and the sulfide solid electrolyte has been demanded to have an enhanced ionic conductivity.

The ionic conductivity is determined by the kinds and the compositional ratio of the raw materials used, and the heat treatment temperature. The sulfide solid electrolyte has been improved in ionic conductivity by optimizing the crystal form thereof (PTL 1).

There have been attempts that focusing on the crystallite diameter of the solid electrolyte, the ionic conductivity is improved by increasing the crystallite diameter (PTL 2), and a complexing agent having a tertiary amino group is used in the production of the solid electrolyte, thereby decreasing the content of crystalline $Li_3PS_4$ in the resulting solid electrolyte (PTL 3).

Citation List

Patent Literatures

PTL 1: JP 2014-89971 A
PTL 2: JP 2019-200851 A
PTL 3: WO 2020/105737

Summary of Invention

Technical Problem

The present invention has been made in view of the actual circumstances, and an object thereof is to provide sulfide solid electrolyte glass ceramics that have a high ionic conductivity, an enhanced water resistance, and an improved initial irreversible capacity when made into a battery, and is also to provide a method of producing the sulfide solid electrolyte glass ceramics.

Solution to Problem

The sulfide solid electrolyte glass ceramics according to the present invention are
sulfide solid electrolyte glass ceramics that have peaks at 20.2° and 23.6° in an X-ray diffractometry (XRD) using the CuKo line, a crystallite diameter of 30 nm or more, and a $P_2S_6^{4-}$ phosphorus proportion obtained by a solid $^{31}P$-NMR spectroscopy of 4.5% by mol or less, and

The method of producing sulfide solid electrolyte glass ceramics according to the present invention is

the method of producing sulfide solid electrolyte glass ceramics according to any one of claims 1 to 8, including
a step (A) of treating $Li_2S$ and $P_2S_5$ by at least one kind selected from agitation, mixing, and pulverization, so as to provide a solid electrolyte (A), and
a step (B) of treating the solid electrolyte (A), $Li_2S$, and a lithium halide by at least one kind selected from agitation, mixing, and pulverization, so as to provide a solid electrolyte (B).

Advantageous Effects of Invention

The present invention can provide sulfide solid electrolyte glass ceramics that have a high ionic conductivity, an enhanced water resistance, and an improved initial irreversible capacity when made into a battery, and can also provide a method of producing the sulfide solid electrolyte glass ceramics.

Brief Description of Drawings

Fig. 1 is a flow chart describing one example of an embodiment of the production method of the present embodiment.
Fig. 2 is an illustration describing the calculation method of the crystallite diameter (X-ray diffractometry (XRD)).
Fig. 3 is an illustration describing the calculation method of the crystallite diameter (X-ray diffractometry (XRD)).
Fig. 4 is an exposure test equipment for evaluating the water resistance.
Fig. 5 is the X-ray diffractometry (XRD) result of the solid electrolyte (A1) obtained in the step (A) of Example 1.
Fig. 6 is the X-ray diffractometry (XRD) result of the solid electrolyte (B1) obtained in the step (B) of Example 1.
Fig. 7 is the differential thermal analysis (DTA) result of the solid electrolyte (B1) obtained in the step (B) of Example 1.
Fig. 8 is the differential thermal analysis (DTA) result of the sulfide solid electrolyte glass ceramics (1) obtained by the heating step after the step (B) of Example 1.
Fig. 9 is the X-ray diffractometry (XRD) result of the sulfide solid electrolyte glass ceramics (1) obtained by the heating step after the step (B) of Example 1.
Fig. 10 is the X-ray diffractometry (XRD) result of the crystalline solid electrolyte (A2) obtained by the heating step (first time) of Example 2.
Fig. 11 is the differential thermal analysis (DTA) result of the sulfide solid electrolyte glass ceramics (2) obtained in Example 2.
Fig. 12 is the X-ray diffractometry (XRD) result of the amorphous solid electrolyte (B6) obtained in Example 6.
Fig. 13 is the X-ray diffractometry (XRD) result of the sulfide solid electrolyte glass ceramics (6) obtained in Example 6.
Fig. 14 is the differential thermal analysis (DTA) result of the sulfide solid electrolyte glass ceramics (6) obtained in Example 6.
Fig. 15 is the X-ray diffractometry (XRD) result of the sulfide solid electrolyte glass ceramics (C1) obtained in Comparative Example 1.
Fig. 16 is the differential thermal analysis (DTA) result of the sulfide solid electrolyte glass ceramics (C1) obtained in Comparative Example 1.
Fig. 17 is the differential thermal analysis (DTA) result of the sulfide solid electrolyte glass ceramics (C3) obtained in Comparative Example 3.
Fig. 18 is a conceptual diagram of a graph for calculating the capacity per mass of the sulfide solid electrolyte glass ceramics, used for obtaining the irreversible capacity.
Fig. 19 is a conceptual diagram of a graph for obtaining the irreversible capacity.

Description of Embodiments

Embodiments of the present invention (which may be hereinafter referred to as a "present embodiment") will be described below. In the description herein, the upper limit values and the lower limit values relating to the numerical ranges, e.g., "or more", "or less", and "to", are numerical values that can be optionally combined, and the values in the examples can be used as the upper limit values and the lower limit values.

(Knowledge obtained by Present Inventors reaching Present Invention)

The present inventors have made earnest investigations for solving the problem, and consequently have found the following matters, and thus the present invention has been completed.
As described in PTL 1, the sulfide solid electrolyte has $PS_4^{3-}$ as the major skeleton. The sulfide solid electrolyte having been confirmed to have peaks at the particular positions in the XRD measurement is obtained therein, but the sulfide solid electrolyte obtained thereby still has room for improvement in the ionic conductivity and the water resistance. Furthermore, PTL 1 does not produce a battery using the resulting sulfide solid electrolyte, and does not evaluate the battery characteristics thereof, such as the initial irreversible capacity.
PTL 2 tries to increase the crystallite diameter, which is still approximately 20 nm as shown in Table 1, and there is room for improvement therein. Furthermore, the literature does not refer to the $P_2S_6^{4-}$ phosphorus proportion, and does not confirm the battery characteristics, such as the initial irreversible capacity.

PTL 3 does not refer to the crystallite diameter and the $P_2S_6{}^{4-}$ phosphorus proportion, and does not confirm the battery characteristics, such as the initial irreversible capacity.

The present inventors have earnestly investigated the sulfide solid electrolyte of PTL 1 and the solid electrolytes of PTL 2 and PTL 3. They have focused the positions of peaks obtained by an X-ray diffractometry (XRD) of the sulfide solid electrolyte glass ceramics, the crystallite diameter described later, and the $P_2S_6{}^{4-}$ phosphorus proportion obtained by a solid $^{31}$P-NMR spectroscopy described later that is allowed to be the particular value or less. They have found that the ionic conductivity and the water resistance of the sulfide solid electrolyte glass ceramics can be enhanced, and the irreversible capacity in the initial cycle (in the description herein, the irreversible capacity means the irreversible capacity in the initial cycle (i.e., the initial irreversible capacity)), which is one of the battery characteristics obtained by the CV measurement, can be suppressed, by controlling the peaks at the particular positions, allowing the crystallite diameter to be the particular value or more, and allowing the $P_2S_6{}^{4-}$ phosphorus proportion to be the particular value or less. They simultaneously have found that the sulfide solid electrolyte glass ceramics can be obtained in a high yield by the production method.

The sulfide solid electrolyte glass ceramics have peaks at the particular positions in an X-ray diffractometry (XRD), the particular crystallite diameter, and the $P_2S_6{}^{4-}$ phosphorus proportion obtained by a solid $^{31}$P-NMR spectroscopy that is the particular value or less, and these characteristics are matters that have not been known in the art. Furthermore, the method of producing sulfide solid electrolyte glass ceramics can enhance the ionic conductivity and the water resistance of the sulfide solid electrolyte glass ceramics, only by changing the method of adding the raw materials having been used, and can provide a battery obtained therewith that is excellent in irreversible capacity, and thus the present embodiment is a significantly excellent production method.

The methods for producing modified sulfide solid electrolyte powder according to the first to thirteenth embodiments of the present embodiment will be described below.

**[0020]** - The sulfide solid electrolyte glass ceramics according to the first embodiment of the present embodiment are sulfide solid electrolyte glass ceramics that have peaks at 20.2° and 23.6° in an X-ray diffractometry (XRD) using the CuKa line, a crystallite diameter of 30 nm or more, and a $P_2S_6{}^{4-}$ phosphorus proportion obtained by a solid $^{31}$P-NMR spectroscopy of 4.5% by mol or less.

The X-ray diffractometry (XRD) using the CuKa line and the determination of the $P_2S_6{}^{4-}$ phosphorus proportion obtained by a solid $^{31}$P-NMR spectroscopy can be performed, for example, by the methods described in the examples.

The invention described in PTL 1 focuses the peaks at the particular positions in the X-ray diffractometry (XRD) of the sulfide solid electrolyte, but does not focus the crystallite diameter of the sulfide solid electrolyte. Furthermore, the $P_2S_6{}^{4-}$ phosphorus proportion obtained by a solid $^{31}$P-NMR spectroscopy is not referred. Accordingly, it cannot be said that the ionic conductivity and the water resistance thereof are sufficiently high. Furthermore, PTL 1 does not investigate the battery characteristics, such as the irreversible capacity, of the battery produced with the resulting sulfide solid electrolyte.

The invention described in PTL 2 describes the crystallite diameter of the solid electrolyte, which is still not sufficiently large, and does not refer to the $P_2S_6{}^{4-}$ phosphorus proportion obtained by a solid $^{31}$P-NMR spectroscopy. Accordingly, the ionic conductivity and the water resistance thereof are not sufficiently high. Furthermore, PTL 2 does not investigate the battery characteristics, such as the irreversible capacity, of the battery produced with the resulting sulfide solid electrolyte.

The invention described in PTL 3 does not refer to the crystallite diameter and the $P_2S_6{}^{4-}$ phosphorus proportion obtained by a solid $^{31}$P-NMR spectroscopy of the solid electrolyte. Accordingly, there is room for improvement in the ionic conductivity and the water resistance. Furthermore, PTL 3 does not investigate the battery characteristics, such as the irreversible capacity, of the battery produced with the resulting sulfide solid electrolyte.

According to the first embodiment, on the other hand, the sulfide solid electrolyte glass ceramics are enhanced in ionic conductivity and water resistance, and are suppressed in irreversible capacity when made into a battery, by controlling the peaks at the particular positions, allowing the crystallite diameter to be the particular value or more, and allowing the $P_2S_6{}^{4-}$ phosphorus proportion obtained by a solid $^{31}$P-NMR spectroscopy to be the particular value or less.

Although the mechanism of the excellent ionic conductivity and the excellent water resistance achieved by the sulfide solid electrolyte glass ceramics according to the first embodiment is not clear, the following hypothesis can be considered. The increase of the crystallite diameter means the reduction of the proportion of the crystal grain boundary. At the crystal grain boundary, it is considered that the diffusion of lithium ions is suppressed, and the invasion of water is facilitated, and therefore the reduction of the crystal grain boundary may enhance the ionic conductivity and the water resistance. This effect may be exerted conspicuously at the particular crystallite diameter or more.

The investigations by the present inventors have revealed that the $P_2S_6{}^{4-}$ component is readily hydrolyzed. The $P_2S_6{}^{4-}$ component inhibits by itself the ionic conduction of Li ions, and simultaneously functions as a factor inhibiting the crystal growth of the solid electrolyte, resulting in the possibility that the crystallite diameter is inhibited to be increased when the amount of the component is large. Accordingly, the water resistance and the ionic conductivity may be enhanced by allowing the $P_2S_6{}^{4-}$ phosphorus proportion of the sulfide solid electrolyte glass ceramics to be 4.5% by mol or less.

Furthermore, the $P_2S_6^{4-}$ component traps Li ions in the solid electrolyte, resulting in the possibility that the deterioration of the battery is accelerated, and therefore the enhancement of the oxidation characteristics when made into a battery may be expected by allowing the $P_2S_6^{4-}$ phosphorus proportion of the sulfide solid electrolyte glass ceramics to be 4.5% by mol or less.

Although the mechanism of the suppression of the irreversible capacity and the excellent battery characteristics achieved by making the sulfide solid electrolyte glass ceramics according to the first embodiment into a battery is not clear, such a hypothesis can be considered that the amount of lithium ions consumed in the initial discharge and charge of the battery is reduced by the effect of enhancing the ionic conductivity and the oxidation characteristics, which is obtained by the enhancement of the chemical stability of the solid electrolyte due to the reduction of the crystal grain boundary, and the $P_2S_6^{4-}$ phosphorus proportion that is allowed to be the particular value or less.

The $P_2S_6^{4-}$ phosphorus proportion can be determined by a solid $^{31}$P-NMR, which may be performed, for example, by the methods described in the examples.

The sulfide solid electrolyte glass ceramics according to the second embodiment of the present embodiment are the sulfide solid electrolyte glass ceramics, in which the sulfide solid electrolyte glass ceramics have only one exothermic peak having an intensity of 0.15 W/g or more at 310°C or less in a differential thermal analysis (DTA).

The differential thermal analysis (DTA) may be performed, for example, by the methods described in the examples.

The sulfide solid electrolyte glass ceramics of the present invention generally have one crystallization exothermic peak at 310°C or less, which is derived from the transition from the highly conductive crystals to the lowly conductive crystals, and the transition is preferably suppressed. Two crystallization exothermic peaks may occasionally appear at 310°C or less. The peak on the low temperature side relates to the deposition of the highly conductive crystals, the existence of which means the insufficient growth of the highly conductive crystals, and therefore is preferably avoided. In summary, only one crystallization exothermic peak having an intensity of 0.15 W/g or more existing in a temperature range of 310°C or less, and the sufficiently high intensity thereof are advantageous for the enhancement of the ionic conductivity. In addition to the first embodiment, it is preferred to regulate to have only one crystallization peak having an intensity of 0.15 W/g or more at 310°C or less in a differential thermal analysis (DTA), and thereby the ionic conductivity can be enhanced.

The sulfide solid electrolyte glass ceramics according to the third embodiment of the present embodiment are the sulfide solid electrolyte glass ceramics, in which the sulfide solid electrolyte glass ceramics have a ratio ($I_{Li2S}/I_{P2S5}$) of a molar fraction ($I_{Li2S}$) of $Li_2S$ and a molar fraction ($I_{P2S5}$) of $P_2S_5$ calculated from elemental ratios measured with an inductively coupled plasma (ICP) emission spectrophotometer of 2.6 or more and 3.3 or less.

The measurement with an inductively coupled plasma (ICP) emission spectrophotometer may be performed, for example, by the methods described in the examples, or the like.

In addition to the first embodiment, it is preferred that the ratio ($I_{Li2S}/I_{P2S5}$) of the molar fraction ($I_{Li2S}$) of $Li_2S$ and the molar fraction ($I_{P2S5}$) of $P_2S_5$ is in the particular range since the $P_2S_6^{4-}$ component as an impurity of the solid electrolyte can be reduced, and the ionic conductivity and the water resistance can be enhanced. The residual amount of $Li_2S$ is also preferably small since the reduction of the free sulfur atoms is led thereby, the water resistance can be enhanced, and the irreversible capacity when made into a battery can be suppressed.

The sulfide solid electrolyte glass ceramics according to the fourth embodiment of the present embodiment are the sulfide solid electrolyte glass ceramics, in which a solid electrolyte (B) as a production intermediate of the sulfide solid electrolyte glass ceramics has a $P_2S_6^{4-}$ phosphorus proportion obtained by a solid $^{31}$P-NMR spectroscopy of 15.0% by mol or less.

The solid electrolyte (B) is obtained in the step (B) of the eighth embodiment described later, and is a production intermediate in the production of the sulfide solid electrolyte glass ceramics.

The $P_2S_6^{4-}$ component in the solid electrolyte (B) inhibits by itself the ionic conduction of Li ions, and simultaneously functions as a factor inhibiting the crystal growth of the solid electrolyte (B), resulting in the possibility that the crystallite diameter is inhibited to be increased when the amount of the component is large. It has also been known that the $P_2S_6^{4-}$ component is readily hydrolyzed. In addition to the first embodiment, it is preferred that the $P_2S_6^{4-}$ phosphorus proportion of the solid electrolyte (B) is 15.0% by mol or less, and thereby the ionic conductivity and the water resistance can be enhanced. It is also preferred since when the sulfide solid electrolyte glass ceramics produced with the solid electrolyte (B) are made into a battery, the irreversible capacity can be suppressed.

The sulfide solid electrolyte glass ceramics according to the fifth embodiment of the present embodiment are the sulfide solid electrolyte glass ceramics, in which a solid electrolyte (B) as a production intermediate of the sulfide solid electrolyte glass ceramics has an exothermic peak appearing first at a temperature of 130°C or more in a temperature rise process in a differential thermal analysis (DTA) that has a full width at half maximum of 8.0°C or less.

In addition to the first embodiment, it is preferred that the full width at half maximum of the exothermic peak of the solid electrolyte (B) appearing first at a temperature of 130°C or more in the temperature rise process in a differential thermal analysis (DTA) is 8.0°C or less since the sulfide solid electrolyte glass ceramics having a large crystallite diameter can be produced through crystallization of the solid electrolyte (B) at around the temperature of the exothermic peak, and thereby the ionic conductivity and the water resistance can be enhanced.

The sulfide solid electrolyte glass ceramics according to the sixth embodiment of the present embodiment are the sulfide solid electrolyte glass ceramics, in which the sulfide solid electrolyte glass ceramics contain a lithium atom, a phosphorus atom, a sulfur atom, and a halogen atom.

In addition to the first embodiment, it is preferred that a lithium atom, a phosphorus atom, a sulfur atom, and a halogen atom are contained since the ionic conductivity and the water resistance can be further enhanced.

The sulfide solid electrolyte glass ceramics according to the seventh embodiment of the present embodiment are the sulfide solid electrolyte glass ceramics, in which the halogen atom is at least one kind selected from a chlorine atom, a bromine atom, and an iodine atom.

In addition to the first embodiment, it is preferred that the halogen atom is at least one kind selected from a chlorine atom, a bromine atom, and an iodine atom since the ionic conductivity and the water resistance can be further enhanced.

The method of producing sulfide solid electrolyte glass ceramics according to the eighth embodiment of the present embodiment is

a method of producing the sulfide solid electrolyte glass ceramics according to any one of the first to seventh embodiments, including a step (A) of treating $Li_2S$ and $P_2S_5$ by at least one kind selected from agitation, mixing, and pulverization, so as to provide a solid electrolyte (A), and a step (B) of treating the solid electrolyte (A), $Li_2S$, and a lithium halide by at least one kind selected from agitation, mixing, and pulverization, so as to provide a solid electrolyte (B).

According to the eighth embodiment, the sulfide solid electrolyte glass ceramics according to the first to seventh embodiments can be obtained at a high efficiency.

Specifically, the sulfide solid electrolyte glass ceramics enhanced in ionic conductivity and water resistance can be produced by the eighth embodiment. The mechanism therefor will be described in detail below.

As described in PTL 1, the sulfide solid electrolyte glass ceramics have $PS_4^{3-}$ as the major skeleton, but also have subskeletons, such as $P_2S_6^{4-}$ and $P_2S_7^{4-}$, and for enhancing the ionic conductivity of the sulfide solid electrolyte glass ceramics, it is effective to reduce the $P_2S_6^{4-}$ phosphorus proportion. This is described, for example, in WO 2018/225526. It has also been known that $P_2S_7^{4-}$ has significantly poor water resistance, and it is preferred to reduce the component.

However, the ordinary production method performing the synthesis by charging all the raw materials at one time is difficult to control the $P_2S_6^{4-}$ phosphorus proportion and the $P_2S_7^{4-}$ phosphorus proportion, and these proportions substantially cannot be changed by changing the general condition, such as the reaction temperature and the reaction time.

According to the eighth embodiment, on the other hand, the solid electrolyte (A) is obtained in the step (A), and then the solid electrolyte (B) is obtained in the step (B). As a result of the earnest investigations, it has been found that the contents of the subskeletons in the sulfide solid electrolyte glass ceramics, such as $P_2S_6^{4-}$ and $P_2S_7^{4-}$, which lead the deterioration in characteristics of the sulfide solid electrolyte glass ceramics, can be controlled by dividing the synthesis into the two steps, and thus the production method according to the eighth embodiment has been completed.

The sulfide solid electrolyte glass ceramics have the subskeletons, such as $P_2S_6^{4-}$ and $P_2S_7^{4-}$, in addition to $PS_4^{3-}$ as the major skeleton, and this is the same as in the solid electrolyte (A). However, the subskeleton of the solid electrolyte (A) preferably exists as $P_2S_7^{4-}$. This is because $P_2S_7^{4-}$ can be easily converted to $PS_4^{3-}$ as the major skeleton through the reaction with $Li_2S$ in the step (B). On the other hand, $P_2S_6^{4-}$ has a low decomposition rate to $PS_4^{3-}$, and for reducing $P_2S_6^{4-}$ deteriorating the ionic conductivity of the solid electrolyte (B), the content of $P_2S_6^{4-}$ in the solid electrolyte (A) is preferably small.

As a result of the earnest investigations in view of the mechanism, the method of producing sulfide solid electrolyte glass ceramics according to the ninth embodiment has been completed, which is the method of producing sulfide solid electrolyte glass ceramics, in which the solid electrolyte (A) contains $Li_4P_2S_7$, and the solid electrolyte (A) has a $P_2S_7^{4-}$ phosphorus proportion measured by $^{31}P$-NMR spectroscopy of 20.0% by mol or more.

In the ninth embodiment, it is also preferred that the solid electrolyte (A) contains $P_2S_7^{4-}$, and the solid electrolyte (A) has a $P_2S_7^{4-}$ phosphorus proportion of 20.0% by mol or more since $Li_2S$ added in the step (B) can be sufficiently consumed to enhance the water resistance ($Li_2S$ is one of the factors deteriorating the water resistance). In addition, $P_2S_7^{4-}$ derived from the solid electrolyte (A) remains in the solid electrolyte (B) in a certain amount, but is substantially eliminated by heating afterward for forming glass ceramics and causes no problem ($P_2S_6^{4-}$ is not reduced by heating). Furthermore, there is a tendency that the $P_2S_7^{4-}$ phosphorus proportion and the $P_2S_6^{4-}$ phosphorus proportion in the solid electrolyte (A) oppose each other, and it is preferred to allow the former to be 20.0% by mol or more since the $P_2S_6^{4-}$ phosphorus proportion in the solid electrolyte (A) can be sufficiently small, which leads the reduction of the $P_2S_6^{4-}$ phosphorus proportion in the solid electrolyte (B), and thereby the ionic conductivity and the water resistance can be enhanced through the same mechanism as described for the fourth embodiment, suppressing the irreversible capacity when made into a battery.

The method of producing sulfide solid electrolyte glass ceramics according to the tenth embodiment is the method of producing sulfide solid electrolyte glass ceramics, in which the solid electrolyte (B) has $PS_4^{3-}$ as a major skeleton.

It is preferred that the solid electrolyte (B) has $PS_4^{3-}$ as the major skeleton since the ionic conductivity and the water resistance can be enhanced.

The method of producing sulfide solid electrolyte glass ceramics according to the eleventh embodiment is the method of producing sulfide solid electrolyte glass ceramics, in which the method further includes heating the solid electrolyte (B).

In the case where the solid electrolyte (B) is an amorphous sulfide solid electrolyte, it is preferred to form the glass ceramics by heating the solid electrolyte since the ionic conductivity and the water resistance can be largely enhanced.

The method of producing sulfide solid electrolyte glass ceramics according to the twelfth embodiment is the method of producing sulfide solid electrolyte glass ceramics, in which the solid electrolyte (B) is heated to a temperature that is lower by 5 to 30°C than a peak top temperature of an exothermic peak observed on the lowest temperature side at 130°C or more in a DTA measurement of the solid electrolyte (B).

In the case where the solid electrolyte (B) is an amorphous sulfide solid electrolyte, it is preferred to form the glass ceramics by heating the solid electrolyte (B) to a temperature within the range since the ionic conductivity and the water resistance can be largely enhanced.

The method of producing sulfide solid electrolyte glass ceramics according to the thirteenth embodiment is the method of producing sulfide solid electrolyte glass ceramics, in which the method further includes heating the solid electrolyte (A).

It is preferred to form the glass ceramics by heating the amorphous solid electrolyte (A) since the ionic conductivity and the water resistance of the sulfide solid electrolyte glass ceramics of the present invention can be largely enhanced.

In the case where the amorphous solid electrolyte (A) containing $P_2S_7^{4-}$ is obtained and then heated, the $P_2S_7^{4-}$ phosphorus proportion is further increased, and the $P_2S_6^{4-}$ phosphorus proportion is reduced thereby. It is preferred since the low $P_2S_6^{4-}$ phosphorus proportion can be retained or further reduced in the subsequent step (B), and the ionic conductivity can be further improved.

The battery including sulfide solid electrolyte glass ceramics according to the fourteenth embodiment of the present embodiment is
a battery including the sulfide solid electrolyte glass ceramics according to any one of the first to seventh embodiments of the present embodiment.

The use of the sulfide solid electrolyte glass ceramics according to any one of the first to seventh embodiments of the present embodiment largely enhances the ionic conductivity and the water resistance, and thereby a battery having a suppressed irreversible capacity can be obtained.

[Sulfide Solid Electrolyte Glass Ceramics]

The sulfide solid electrolyte glass ceramics of the present embodiment are preferably obtained through the heating described later of amorphous sulfide solid electrolyte, and necessarily have peaks at 20.2° and 23.6° in an X-ray diffractometry (XRD) using the CuKo line, and a crystallite diameter of 30 nm or more.

The positions of peaks in an X-ray diffractometry (XRD) using the CuKα line and the crystallite diameter can be determined, for example, by the methods described in the examples.

The sulfide solid electrolyte glass ceramics of the present embodiment contain, as the major crystal, a crystal structure having peaks at around $2\theta = 20.2°$ and $2\theta = 23.6°$ (see, for example, JP 2013-16423 A), and may contain, as additional crystal structures, an $Li_3PS_4$ crystal structure, an $Li_4P_2S_6$ crystal structure, an $Li_7PS_6$ crystal structure, an $Li_7P_3S_{11}$ crystal structure, an $Li_7P_2S_8X$ crystal structure, and an $Li_4PS_4X$ crystal structure (wherein X represents a halogen element).

Examples thereof also include an $Li_{4-x}Ge_{1-x}P_xS_4$-based thio-LISICON Region II-type crystal structure (see Kanno, et al., Journal of The Electrochemical Society, 148 (7) A742-746 (2001)) and a crystal structure similar to the $Li_{4-x}Ge_{1-x}P_xS_4$-based thio-LISICON Region II-type crystal structure (see Solid State Ionics, 177 (2006), 2721-2725). Among them, the thio-LISICON Region II-type crystal structure is preferred as the crystal structure of the sulfide solid electrolyte glass ceramics of the present embodiment from the standpoint that a higher ionic conductivity is obtained. The "thio-LISICON Region II-type crystal structure" herein shows any one of an $Li_{4-x}Ge_{1-x}P_xS_4$-based thio-LISICON Region II-type crystal structure and a crystal structure similar to the $Li_{4-x}Ge_{1-x}P_xS_4$-based thio-LISICON Region II-type crystal structure. The sulfide solid electrolyte glass ceramics of the present embodiment may have the thio-LISICON Region II-type crystal structure or may have the thio-LISICON Region II-type crystal structure as the major crystal, and preferably have the thio-LISICON Region II-type crystal structure as the major crystal from the viewpoint of the achievement of a higher ionic conductivity. In the description herein, the expression "having as the major crystal" means that the proportion of the target crystal structure in the crystal structure is 80% or more, preferably 90% or more, and more preferably 95% or more. The sulfide solid electrolyte glass ceramics of the present embodiment preferably do not contain crystalline $Li_3PS_4$ ($\beta$-$Li_3PS_4$) from the standpoint of achieving a higher ionic conductivity.

In the X-ray diffractometry using the CuKa line, the $Li_3PS_4$ crystal structure provides diffraction peaks, for example, at around $2\theta$ = 17.5°, 18.3°, 26.1°, 27.3°, and 30.0°; the $Li_4P_2S_6$ crystal structure provides diffraction peaks, for example, at around $2\theta$ = 16.9°, 27.1°, and 32.5°; the $Li_7PS_6$ crystal structure provides diffraction peaks, for example, at around $2\theta$ = 15.3°, 25.2°, 29.6°, and 31.0°; the $Li_7P_3S_{11}$ crystal structure provides diffraction peaks, for example, at around $2\theta$ = 17.8°, 18.5°, 19.7°, 21.8°, 23.7°, 25.9°, 29.6°, and 30.0°; the $Li_{4-x}Ge_{1-x}P_xS_4$-based thio-LISICON Region II-type crystal structure provides diffraction peaks, for example, at around $2\theta$ = 20.1°, 23.9°, and 29.5°; and the crystal structure similar to the $Li_{4-x}Ge_{1-x}P_xS_4$-based thio-LISICON Region II-type crystal structure provides diffraction peaks, for example, at around $2\theta$ = 20.2 and 23.6°. The position of these peaks may vary within a range of $\pm 0.5°$.

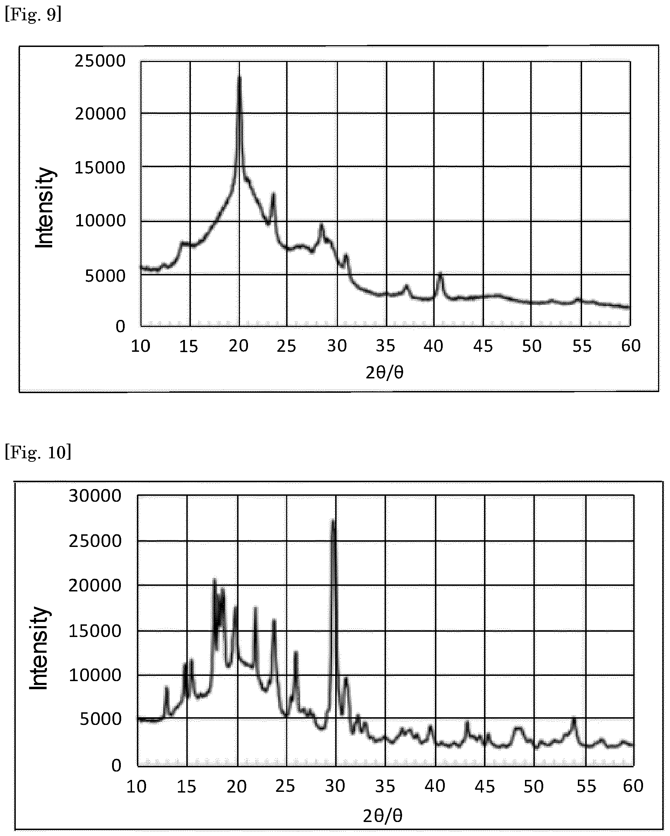

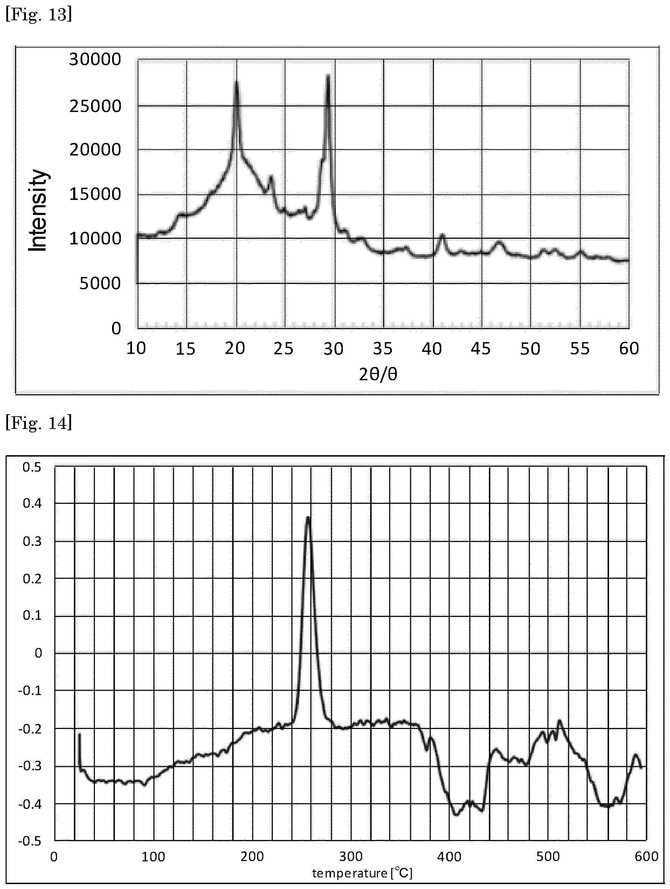

As described above, the sulfide solid electrolyte glass ceramics of the present embodiment preferably do not contain crystalline $Li_3PS_4$ ($\beta$-$Li_3PS_4$). Figs. 9 and 13 show examples of the X-ray diffractometry of the sulfide solid electrolyte glass ceramics of the present embodiment. The sulfide solid electrolyte glass ceramics of the present embodiment do not have diffraction peaks at $2\theta$ = 17.5° and 26.1° derived from crystalline $Li_3PS_4$, or even in the case where the diffraction peaks appear, only extremely small peaks are detected as compared to the thio-LISICON Region II-type crystal structure.

The crystal structure represented by a compositional formula $L1_{7-x}P_{1-y}Si_yS_6$ or $Li_{7+x}P_{1-y}Si_yS_6$ (wherein x is -0.6 to 0.6, and y is 0.1 to 0.6) having the structure skeleton of $Li_7PS_6$, in which a part of P is substituted with Si, is a cubic crystal or a rhombic crystal, and preferably a cubic crystal, and in the X-ray diffractometry using a CuKo line, the crystal structure provides peaks appearing mainly at $2\theta$ = 15.5°, 18.0°, 25.0°, 30.0°, 31.4°, 45.3°, 47.0°, and 52.0°. The crystal structure represented by the compositional formula $Li_{7-x-2y}PS_{6-x-y}Cl_x$ (wherein $0.8 \leq x \leq 1.7$, and $0 < y \leq (-0.25x + 0.5)$) is preferably a cubic crystal, and in the X-ray diffractometry using a CuKa line, the crystal structure provides peaks appearing mainly at $2\theta$ = 15.5°, 18.0°, 25.0°, 30.0°, 31.4°, 45.3°, 47.0°, and 52.0°. The crystal structure represented by the compositional formula $Li_{7-x}PS_{6-x}Ha_x$ (herein Ha represents Cl or Br, and x is preferably 0.2 to 1.8) is preferably a cubic crystal, and in the X-ray diffractometry using a CuKa line, the crystal structure provides peaks appearing mainly at $2\theta$ = 15.5°, 18.0°, 25.0°, 30.0°, 31.4°, 45.3°, 47.0°, and 52.0°.

These peak positions may vary within a range of $\pm 0.5°$.

The crystallite diameter of the sulfide solid electrolyte glass ceramics of the present embodiment is necessarily 30 nm or more. The crystallite diameter thereof is preferably 33 nm or more, more preferably 35 nm or more, further preferably 40 nm or more, still further preferably 70 nm or more, and still more further preferably 80 nm or more, from the standpoint of enhancing the ionic conductivity and the water resistance, and as will be described later, the crystallite diameter of the sulfide solid electrolyte glass ceramics can be further increased by crystallizing after the step (A), in which the crystallite diameter thereof is even further preferably 90 nm or more. The upper limit value thereof is not particularly limited, and is preferably 300 nm or less, more preferably 250 nm or less, further preferably 200 nm or less, still further preferably 150 nm or less, and still more further preferably 130 nm or less, from the standpoint of the easiness in production thereof, the availability thereof, and the easiness in production of a battery and the like.

The $P_2S_6^{4-}$ phosphorus proportion obtained by a solid $^{31}$P-NMR spectroscopy of the sulfide solid electrolyte glass ceramics of the present embodiment is necessarily 4.5% by mol or less, and is preferably 4.0% by mol or less, more preferably 3.0% by mol or less, further preferably 2.5% by mol or less, still further preferably 2.2% by mol or less, and still more further preferably 2.0% by mol or less, from the standpoint of enhancing the ionic conductivity and the water resistance, and the suppression of the irreversible capacity. The $P_2S_6^{4-}$ phosphorus proportion is preferably as small as possible, and the lower limit value thereof is not particularly limited, and may be substantially 0% by mol or more. The expression "substantially" means that 0% by mol encompasses the detection limit or less.

In the sulfide solid electrolyte glass ceramics of the present embodiment, the $P_2S_7^{4-}$ phosphorus proportion is preferably small from the standpoint of the ionic conductivity of the sulfide solid electrolyte glass ceramics, and is preferably 20.0% or less, more preferably 10.0% or less, and further preferably 8.0% or less, and the lower limit thereof is preferably close to 0%.

The sulfide solid electrolyte glass ceramics of the present embodiment preferably have only one exothermic peak having an intensity of 0.15 W/g or more at 310°C or less in a differential thermal analysis (DTA) from the standpoint of enhancing the ionic conductivity, and the intensity is more preferably 0.20 W/g or more, and further preferably 0.25 W/g or more. The upper limit value thereof is preferably 5.0 W/g or less, more preferably 3.0 W/g or less, further preferably 1.0 W/g or less, and still further preferably 0.80 W/g or less.

The exothermic peak of the sulfide solid electrolyte glass ceramics of the present embodiment is preferably at 200°C or more and 350°C or less, more preferably 230°C or more and 320°C or less, and further preferably 250°C or more and 300°C or less.

The ratio ($I_{Li2S}/I_{P2S5}$) of the molar fraction ($I_{Li2S}$) of $Li_2S$ and the molar fraction ($I_{P2S5}$) of $P_2S_5$ calculated from

elemental ratios measured with an inductively coupled plasma (ICP) emission spectrophotometer of the sulfide solid electrolyte glass ceramics of the present embodiment is preferably 2.60 or more and 3.30 or less since the ionic conductivity and the water resistance can be enhanced to suppress the irreversible capacity when made into a battery, and is more preferably 2.70 or more and 3.20 or less, and further preferably 2.90 or more and 3.10 or less, from the standpoint of enhancing the ionic conductivity and the water resistance.

The measurement with an ICP emission spectrophotometer can be performed, for example, by the methods described in the examples.

The sulfide solid electrolyte glass ceramics of the present embodiment preferably contain a lithium atom, a phosphorus atom, a sulfur atom, and a halogen atom.

According to the configuration, the ionic conductivity and the water resistance can be further enhanced.

In the description herein, the "sulfide solid electrolyte" means an electrolyte that retains a solid state under a nitrogen atmosphere at 25°C, and is a sulfide solid electrolyte containing a lithium atom, a phosphorus atom, and a sulfur atom, having an ionic conductivity derived from a lithium atom. The sulfide solid electrolyte preferably contains a halogen atom depending on necessity.

The halogen atom is more preferably at least one kind selected from a chlorine atom, a bromine atom, and an iodine atom.

In the case where only one kind is contained as the halogen atom, the halogen atom is preferably a bromine atom or an iodine atom, and more preferably an iodine atom.

In the case where two kinds are contained as the halogen atom, any one of a combination of a chlorine atom and a bromine atom, a combination of a chlorine atom and a bromine atom, and a combination of a bromine atom and an iodine atom is preferred, and a combination of a bromine atom and an iodine atom is more preferred.

According to the configuration, the ionic conductivity and the water resistance can be further enhanced, and the irreversible capacity can be suppressed when made into a battery.

In the description herein, the "major skeleton" means that the phosphorus proportion of the $PS_4^{3-}$ unit (i.e., the $PS_4^{3-}$ phosphorus proportion) exceeds 50.0%, and from the standpoint of enhancing the ionic conductivity of the sulfide solid electrolyte, the $PS_4^{3-}$ phosphorus proportion is preferably 60.0% or more, more preferably 70.0% or more, and further preferably 80.0% or more, and the upper limit value thereof is not particularly limited, and is preferably close to 100%.

In the description herein, the proportion of the $PS_4^{3-}$ unit (i.e., the $PS_4^{3-}$ phosphorus proportion), the proportion of the $P_2S_7^{4-}$ unit (i.e., the $P_2S_7^{4-}$ phosphorus proportion), and the proportion of the $P_2S_6^{4-}$ unit (i.e., the $P_2S_6^{4-}$ phosphorus proportion) mean the proportions of the peak areas of the $PS_4^{3-}$ unit, the $P_2S_7^{4-}$ unit, and the $P_2S_6^{4-}$ unit, respectively, with respect to the total area obtained through the waveform separation of the spectrum measured by $^{31}P$-MAS-NMR spectroscopy (solid $^{31}P$-NMR spectroscopy). The detailed conditions for the solid $^{31}P$-NMR spectroscopy are not particularly limited, and the measurement may be performed, for example, by the conditions described in the examples.

The "sulfide solid electrolyte" encompasses both a crystalline sulfide solid electrolyte having a crystal structure and an amorphous sulfide solid electrolyte. In the description herein, the crystalline sulfide solid electrolyte is a sulfide solid electrolyte that has a peak derived from the sulfide solid electrolyte observed in the X-ray diffraction pattern in the X-ray diffractometry, irrespective of the presence of peaks derived from the raw materials of the sulfide solid electrolyte. Accordingly, the crystalline sulfide solid electrolyte contains a crystal structure derived from the sulfide solid electrolyte, a part of which may be the crystal structure derived from the sulfide solid electrolyte, or the whole of which may be the crystal structure derived from the sulfide solid electrolyte. The crystalline sulfide solid electrolyte may contain an amorphous sulfide solid electrolyte as a part thereof, as far as having the X-ray diffraction pattern above, and may not contain an amorphous sulfide solid electrolyte. The amorphous component contained is rather preferred due to the easiness in making into a battery. Accordingly, the crystalline sulfide solid electrolyte encompasses the so-called glass ceramics, which is obtained by heating the amorphous sulfide solid electrolyte to the crystallization temperature or more.

The sulfide solid electrolyte glass ceramics of the present embodiment is a crystalline sulfide solid electrolyte containing an amorphous component. The sulfide solid electrolyte glass ceramics are a sulfide solid electrolyte having an X-ray diffraction pattern in the X-ray diffractometry that has a peak of the crystal structure derived from the sulfide solid electrolyte and a halo pattern derived from the amorphous sulfide solid electrolyte.

In the description herein, the amorphous sulfide solid electrolyte has an X-ray diffraction pattern in the X-ray diffractometry that has a halo pattern with substantially no peak observed, irrespective of the presence of peaks derived from the raw materials of the sulfide solid electrolyte, and the presence of a slight amount of crystals that are unavoidably formed through the operation for isolating the amorphous sulfide solid electrolyte does not matter.

The shape of the sulfide solid electrolyte glass ceramics of the present embodiment is not particularly limited, and examples thereof include a particle form. The average particle diameter ($D_{50}$) of the sulfide solid electrolyte glass ceramics of the present embodiment in a particle form is, for example, in a range of 0.01 pm to 500 pm, and 0.1 to 200 $\mu$m.

The average particle diameter ($D_{50}$) can be measured, for example, with a laser diffraction-scattering particle diameter distribution measuring equipment (e.g., LA-950 V2, Model LA-950 W2, available from Horiba, Ltd.).

The ionic conductivity of the sulfide solid electrolyte glass ceramics of the present embodiment obtained by the production method of the present embodiment is significantly high due to the high $PS_4^{3-}$ phosphorus proportion, and can be generally 0.01 mS/cm or more. The ionic conductivity thereof is preferably 4.50 mS/cm or more, more preferably 4.80 mS/cm or more, and further preferably 5.00 mS/cm or more.

The production method of the present embodiment will be described in more detail below with reference to the embodiment described above.

[Method of producing sulfide Solid Electrolyte Glass Ceramics]

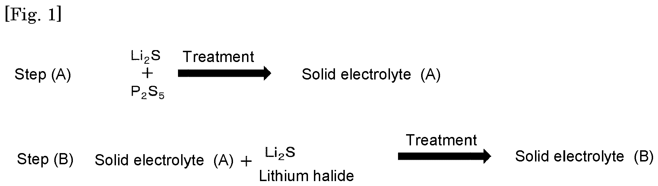

As shown in Fig. 1, the method of producing sulfide solid electrolyte glass ceramics of the present embodiment is necessarily

a method of producing sulfide solid electrolyte glass ceramics, including a step (A) of treating $Li_2S$ and $P_2S_5$ by at least one kind selected from agitation, mixing, and pulverization, so as to provide a solid electrolyte (A), and a step (B) of treating the solid electrolyte (A), $Li_2S$, and a lithium halide by at least one kind selected from agitation, mixing, and pulverization, so as to provide a solid electrolyte (B).

The production method of the present embodiment is preferred since the sulfide solid electrolyte glass ceramics that are enhanced in ionic conductivity and water resistance and suppressed in irreversible capacity when made into a battery can be obtained.

<Step (A)>

The step (A) of the present embodiment necessarily includes treating $Li_2S$ and $P_2S_5$ by at least one kind selected from agitation, mixing, and pulverization described later, so as to provide a solid electrolyte (A).

<Step (B)>

The step (B) of the present embodiment necessarily includes treating the solid electrolyte (A) obtained in the step (A), $Li_2S$, and a lithium halide by at least one kind selected from agitation, mixing, and pulverization described later, so as to provide a solid electrolyte (B).

The step (B) may be performed in such a manner that after completing the step (A), the solid electrolyte (A) is taken out, and $Li_2S$ and a lithium halide are added to the resulting solid electrolyte (A), followed by treating, or in such a manner that after completing the step (A), $Li_2S$ and a lithium halide are added thereto, followed by treating. It is preferred that after completing the step (A), $Li_2S$ and a lithium halide are added to the treating equipment, with which the step (A) has been performed, followed by treating, from the standpoint of avoiding the complication in the production process.

<Treatments>

The treatments in the step (A) and the step (B) of the present embodiment each are necessarily at least one kind selected from agitation, mixing, and pulverization. Any one of agitation, mixing, and pulverization may be performed alone, or a combination thereof may be performed, and pulverization is preferred from the standpoint of allowing the particle diameter of the sulfide solid electrolyte to be the range described later.

The treatments in the step (A) and the step (B) may be the same as or different from each other, and are preferably the same as each other, and the treatments are preferably performed continuously with the same treating equipment from the standpoint of avoiding the complication in the production process.

The treatment of the present embodiment can be performed with a mixer, an agitator, and a pulverizer. An agitator can cause mixing of the raw materials, and a pulverizer causes pulverization of the raw material and can also cause mixing thereof.

Examples of the agitator and the mixer include a mechanical agitation type mixer capable of performing agitation (which may also be referred to as mixing by agitation, or agitation-mixing) with an impeller provided in a reaction tank. Examples of the mechanical agitation type mixer include a high-speed agitation type mixer and a double arm type mixer. Examples of the high-speed agitation type mixer include a vertical axis rotation type mixer and a horizontal axis rotation type mixer, and a mixer of any type may be used.

Examples of the shape of the impeller used in the mechanical agitation type mixer include a blade type, an arm type, an anchor type, a paddle type, a full-zone type, a ribbon type, a multistage blade type, a twin arm type, a shovel type, a biaxial vane type, a flat vane type, and a C-type vane type, in which a shovel type, a flat vane type, a C-type vane type, an anchor type, a paddle type, and a full-zone type are preferred, and an anchor type, a paddle type, and a full-zone type are more preferred, from the standpoint of accelerating the reaction of the raw materials more efficiently.

In the case where the mechanical agitation type mixer is used, the rotation number of the impeller may be appropriately regulated depending on the capacity of the fluid in the reaction tank, the temperature, and the shape of the impeller with no particular limitation, may be generally approximately 5 rpm or more and 400 rpm or less, and is preferably 10 rpm or more and 300 rpm or less, more preferably 15 rpm or more and 250 rpm or less, and further preferably 20 rpm or more and 200 rpm or less, from the standpoint of accelerating the reaction of the raw materials more efficiently.

The temperature condition in mixing with the mixer is not particularly limited, and for example, is generally -30 to 120°C, preferably -10 to 100°C, more preferably 0 to 80°C, and further preferably 10 to 60°C. The mixing time is generally 0.1 to 500 hours, and is preferably 1 to 450 hours, more preferably 10 to 425 hours, further preferably 20 to 400 hours, and still further preferably 30 to 375 hours, from the standpoint of further homogenizing the dispersion state of the raw materials and accelerating the reaction.

The method of performing mixing associated with pulverization with a pulverizer is a method that has been used as a mechanical milling method. Examples of the pulverizer used include a medium type pulverizer using a pulverization medium.

The medium type pulverizer is roughly classified into a container driving type pulverizer and a medium agitation type pulverizer. Examples of the container driving type pulverizer include a ball mill and a bead mill, which each are provided with an agitation tank, a pulverization tank, or a combination thereof. Examples of the medium agitation type pulverizer include various pulverizers, for example, an impact type pulverizer, such as a cutter mill, a hammer mill, and a pin mill; a tower type pulverizer, such as a tower mill; an agitation tank type pulverizer, such as an attritor, an aquamizer, and a sand grinder; a flow tank type pulverizer, such as a visco mill and a pearl mill; a flow tube type pulverizer; an annular pulverizer, such as a co-ball-mill; a continuous dynamic type pulverizer; and a single screw or multiple screw kneader. Among these, a ball mill and a bead mill, which are exemplified as the container driving type pulverizer, are preferred in consideration of the easiness in regulating the particle diameter of the resulting sulfide, and the like.

These pulverizers may be appropriately selected depending on the desired scale and the like, in which a container driving type pulverizer, such as a ball mill and a bead mill, may be used for a relatively small scale, and other types of pulverizers may also be used for a large scale or a mass production scale.

For a liquid state or a slurry state associated with a liquid, such as a solvent, in mixing as described later, a wet pulverizer capable of performing wet pulverization is preferably used.

Representative examples of the wet pulverizer include a wet bead mill, a wet ball mill, and a wet vibration mill, and a wet bead mill using beads as a pulverization medium is preferred since a condition of a pulverizing operation can be freely adjusted and a smaller particle diameter can be easily achieved thereby. A dry pulverizer, for example, a dry medium type pulverizer, such as a dry bead mill, a dry ball mill, a dry planetary ball mill, and a dry vibration mill, and a dry non-medium type pulverizer, such as a jet mill, may also be used.

In the case where the object to be mixed is in a liquid state or a slurry state, a flow type pulverizer capable of performing a circulation operation for circulating the object depending on necessity may also be used. Specific examples thereof include a pulverizer performing circulation between a pulverizer for pulverizing a slurry (pulverization mixer) and a temperature keeping tank (reaction vessel).

The size of the beads or balls used in the ball mill or the bead mill may be appropriately selected depending on the target particle diameter, and the throughput. For example, the diameter of the beads is generally 0.05 mmφ or more, preferably 0.1 mmφ or more, and more preferably 0.3 mmφ or more, and the upper limit thereof is generally 5.0 mmφ or less, preferably 3.0 mmφ or less, and more preferably 2.0 mmφ or less. The diameter of the balls is generally 2.0 mmφ or more, preferably 2.5 mmφ or more, and more preferably 3.0 mmφ or more, and the upper limit thereof is generally 30.0 mmφ or less, more preferably 20.0 mmφ or less, and more preferably 15.0 mmφ or less.

Examples of the material therefor include a metal, such as stainless steel, chromium steel, and tungsten carbide; ceramics, such as zirconia and silicon nitride; and a mineral, such as agate.

The rotation number in the case where a ball mill or a bead mill is used cannot be determined unconditionally since the rotation number may vary depending on the scale to be treated, and is generally 10 rpm or more, preferably 20 rpm or more, and more preferably 50 rpm or more, and the upper limit thereof is generally 1,000 rpm or less, preferably 900 rpm or less, more preferably 800 rpm or less, and further preferably 700 rpm or less.

The pulverization time in this case cannot be determined unconditionally since the pulverization time may vary depending on the scale to be treated, and is generally 5 hours or more, preferably 10 hours or more, more preferably 20 hours or more, and further preferably 30 hours or more, and the upper limit thereof is generally 300 hours or less, preferably 200 hours or less, and more preferably 100 hours or less.

The mixing, agitation, and pulverization, and the treatment combining them each can be performed while selecting the size and the material of the medium used (such as beads or balls), the rotation number of the rotor, and the treatment time, and thereby the particle diameter of the resulting sulfide can be regulated.

(Solvent)

In the mixing described above, a solvent may be added to the raw materials, followed by mixing. The solvent used may be various solvents, which are widely referred to as organic solvents.

The solvent used may be a wide variety of solvents that have been used in the production of solid electrolytes, and examples thereof include a hydrocarbon solvent, such as an aliphatic hydrocarbon solvent, an alicyclic hydrocarbon solvent, and an aromatic hydrocarbon solvent.

Examples of the aliphatic hydrocarbon include hexane, pentane, 2-ethylhexane, heptane, octane, decane, undecane, dodecane, and tridecane, examples of the alicyclic hydrocarbon include cyclohexane and methylcyclohexane, and examples of the aromatic hydrocarbon solvent include benzene, toluene, xylene, mesitylene, ethylbenzene, tert-butylbenzene, trifluoromethylbenzene, and nitrobenzene.

Examples of the solvent also include a solvent containing a hetero element other than carbon element and hydrogen element, such as nitrogen element, oxygen element, sulfur element, and a halogen element, in addition to the hydrocarbon solvent shown above. Preferred examples of this type of solvent include an ether solvent and an ester solvent, and also include an alcohol-based solvent, an aldehyde-based solvent, and a ketone-based solvent, which contain oxygen element as the hetero element.

Preferred examples of the ether solvent include an aliphatic ether, such as dimethyl ether, diethyl ether, tert-butyl methyl ether, dimethoxymethane, dimethoxyethane, diethylene glycol dimethyl ether (diglyme), triethylene oxide glycol dimethyl ether (triglyme), diethylene glycol, and triethylene glycol; an alicyclic ether, such as ethylene oxide, propylene oxide, tetrahydrofuran, tetrahydropyran, dimethoxytetrahydrofuran, cyclopentyl methyl ether, and dioxane; a heterocyclic ether, such as furan, benzofuran, and benzopyran; and an aromatic ether, such as methyl phenyl ether (anisole), ethyl phenyl ether, dibenzyl ether, and diphenyl ether.

Preferred examples of the ester solvent include an aliphatic ester, such as methyl formate, ethyl formate, methyl acetate, ethyl acetate, propyl acetate, isopropyl acetate, methyl propionate, ethyl propionate, dimethyl oxalate, diethyl oxalate, dimethyl malonate, diethyl malonate, dimethyl succinate, and diethyl succinate; an alicyclic ester, such as methyl cyclohexanecarboxylate, ethyl cyclohexanecarboxylate, and dimethyl cyclohexanedicarboxylate; a heterocyclic ester, such as methyl pyridinecarboxylate, methyl pyrimidinecarboxylate, acetolactone, propiolactone, butyrolactone, and valerolactone; and an aromatic ester, such as methyl benzoate, ethyl benzoate, dimethyl phthalate, diethyl phthalate, butyl benzyl phthalate, dicyclohexyl phthalate, trimethyl trimellitate, and triethyl trimellitate.

Preferred examples of the solvent also include an alcohol-based solvent, such as ethanol and butanol; an aldehyde-based solvent, such as formaldehyde, acetaldehyde, and dimethylformamide; and a ketone-based solvent, such as acetone and methyl ethyl ketone.

Examples of the solvent containing nitrogen element as the hetero element include a solvent having a group containing nitrogen element, such as an amino group, an amide group, a nitro group, and a nitrile group. This type of solvents may also be used as a complexing agent for making the solid electrolyte into a complex.

Preferred examples of the solvent having an amino group include an aliphatic amine, such as ethylenediamine, diaminopropane, dimethylethylenediamine, diethylethylenediamine, dimethyldiaminopropane, tetramethyldiaminomethane, tetramethylethylenediamine (TMEDA), and tetramethyldiaminopropane (TMPDA); an alicyclic amine, such as cyclopropanediamine, cyclohexanediamine, and bisaminomethylcyclohexane; a heterocyclic amine, such as isophoronediamine, piperazine, dipyperidylpropane, and dimethylpiperazine; and an aromatic amine, such as phenyldiamine, tolylenediamine, naphthalenediamine, methylphenylenediamine, dimethylnaphthalenediamine, dimethylphenylenediamine, tetramethylphenylenediamine, and tetramethylnaphthalenediamine.

Preferred examples of the solvent also include a solvent containing nitrogen element, such as dimethylformamide, acetonitrile, acrylonitrile, and nitrobenzene.

Preferred examples of the solvent containing a halogen element as the hetero element include dichloromethane, chlorobenzene, trifluoromethylbenzene, chlorobenzene, chlorotoluene, and bromobenzene.

Preferred example of the solvent containing sulfur element include dimethylsulfoxide and carbon disulfide.

In the case where the solvent is used, the amount of the solvent used is preferably 100 mL or more, more preferably 500 mL or more, further preferably 1 L or more, still further preferably 2 L or more, and still more further preferably 4 L or more, per 1 kg in total of the raw materials, and the upper limit thereof is preferably 50 L or less, more preferably 20 L or less, further preferably 15 L or less, and still further preferably 12 L or less. In the case where the amount of the solvent used is in the range, the raw materials can be reacted efficiently.

(Drying)

In the case where the mixing is performed with a solvent, the method may include, after the mixing, drying the fluid (which is generally a slurry) obtained by mixing. The sulfide can be obtained by removing the complexing agent from the complex containing the complexing agent in the case where the complexing agent is used as the solvent, can be obtained by removing the complexing agent and also removing the solvent from the complex containing the complexing agent in the case where the complexing agent and the solvent are used in combination, and can be obtained by removing the solvent therefrom in the case where the solvent other than a complexing agent is used. The resulting sulfide has a structure of a solid electrolyte, such as a $PS_4^{3-}$ unit, and exhibits an ionic conductivity derived from an alkali metal element, such as lithium element and sodium element.

The fluid obtained by mixing may be dried at a temperature corresponding to the kind of the solvent. For example, the fluid may be dried at a temperature of the boiling point of the complexing agent or more.

The fluid may be dried by evaporating the complexing agent and the solvent used depending on necessity under reduced pressure (in vacuum) with a vacuum pump or the like at generally 5 to 100°C, preferably 10 to 85°C, more preferably 15 to 70°C, and further preferably at around room temperature (23°C) (for example, around room temperature ±5°C).

The drying may be performed through filtration of the fluid with a glass filter or the like, solid-liquid separation by decantation, or solid-liquid separation with a centrifugal separator or the like. In the case where the solvent other than the complexing agent is used, the sulfide can be obtained through solid-liquid separation. Also, in the case where the complexing agent is used as the solvent, after the solid-liquid separation, the complexing agent incorporated in the complex may be removed by drying under the temperature condition shown above.

The solid-liquid separation may be easily performed specifically in such a manner that the fluid is placed in a vessel, and after the sulfide (which is the complex in the case where the complexing agent is contained therein, and may also be referred to as a precursor of the sulfide) settles, the complexing agent and the solvent as the supernatant are removed by decantation or by filtering with a glass filter having a pore size of approximately 10 to 200 μm, and preferably 20 to 150 μm.

The drying may be performed after mixing, before the hydrogen treatment described later or after the hydrogen treatment.

($Li_2S$ and $P_2S_5$)

The production method of the present embodiment necessarily uses $Li_2S$ (lithium sulfide) and $P_2S_5$ (diphosphorus pentasulfide).

$Li_2S$ used in the present embodiment is preferably in the form of particles.

The average particle diameter ($D_{50}$) of the $Li_2S$ particles is preferably 10 pm or more and 2,000 pm or less, more preferably 30 pm or less and 1,500 μm or less, and further preferably 50 μm or more and 1,000 μm or less. In the description herein, the average particle diameter ($D_{50}$) is the particle diameter, at which the cumulative amount from the side of the particle having the minimum particle diameter in the particle diameter cumulative curve reaches 50% of the total, and the volume distribution can be measured, for example, with a laser diffraction-scattering particle diameter distribution measuring equipment. $P_2S_5$ also preferably has an average particle diameter that is equivalent to the $Li_2S$ particles, i.e., preferably within the range of the average particle diameter of the $Li_2S$ particles.

In the present embodiment, $Li_2S$ is added in the step (A) and the step (B), and $P_2S_5$ is added in the step (A).

In the step (A), $P_2S_5$ is preferably used in an amount of 0.34 mol or more, more preferably in an amount of 0.38 mol or more, and further preferably in an amount of 0.40 mol or more, and preferably used in an amount of 0.70 mol or less, more preferably in an amount of 0.60 mol or less, and further preferably in an amount of 0.55 mol or less, per 1.00 mol of $Li_2S$, from the standpoint of the preparation of the sulfide solid electrolyte glass ceramics having a high ionic conductivity through the optimization of the content of $P_2S_7^{-4}$ in the solid electrolyte (A).

In the present embodiment, all over the entire process including the step (A) and the step (B), $P_2S_5$ is preferably used in an amount of 0.10 mol or more, more preferably in an amount of 0.20 mol or more, and further preferably in an amount of 0.30 mol or more, and is preferably used in an amount of 0.50 mol or less, more preferably in an amount of 0.40 mol or less, and further preferably in an amount of 0.35 mol or less, per 1.00 mol of $Li_2S$ used, from the standpoint of allowing the sulfide solid electrolyte glass ceramics to have $PS_4^{3-}$ as the major skeleton, reducing the $P_2S_6^{4-}$ phosphorus proportion in the sulfide solid electrolyte, and achieving a high ionic conductivity.

In the present embodiment, $Li_2S$ is added at least on the step (A) and the step (B). $Li_2S$ is preferably used in the step (B) in an amount of 0.10 mol or more, more preferably in an amount of 0.20 mol or more, and further preferably in an amount of 0.25 mol or more, and is preferably used in an amount of 0.80 mol or less, more preferably in an amount of 0.70 mol or less, and further preferably in an amount of 0.65 mol or less, per 1.00 mol of $Li_2S$ used in the step (A), from the standpoint of reducing the $P_2S_6^{4-}$ phosphorus proportion in the sulfide solid electrolyte, and achieving a high ionic conductivity.

$Li_2S$ and $P_2S_5$ used may be commercially available products, and may be materials prepared by the method shown in the examples.

$Li_2S$ preferably has a purity of 95% by mass or more, and more preferably 98% by mass or more, from the standpoint of enhancing the ionic conductivity of the sulfide solid electrolyte glass ceramics, and $P_2S_5$ preferably has a

purity of 95% by mass or more, and more preferably 98% by mass or more, based on $P_4S_{10}$, from the standpoint of enhancing the ionic conductivity of the sulfide solid electrolyte.

(Lithium Halide)

In the present embodiment, a lithium halide is necessarily added in the step (B) for introducing a halogen atom to the sulfide solid electrolyte from the standpoint of achieving the sulfide solid electrolyte glass ceramics having a high ionic conductivity.

The lithium halide is preferably at least one kind selected from lithium chloride, lithium bromide, and lithium iodide, and more preferably a combination of lithium chloride and lithium bromide, or a combination of lithium bromide and lithium iodide.

It suffices that the amount of the lithium halide used satisfies the preferred mixing ratio (molar ratio) of a lithium atom, a sulfur atom, a phosphorus atom, and a halogen atom described later.

(Solid Electrolyte (A))

The solid electrolyte (A) is a solid electrolyte obtained in the step (A), and is preferably a sulfide solid electrolyte having $PS_4^{3-}$ or $P_2S_7^{4-}$ as the major skeleton, and more preferably a sulfide solid electrolyte having $PS_4^{3-}$ as the major skeleton.

In the description herein, the "major skeleton" means that the phosphorus proportion of the $PS_4^{3-}$ unit (i.e., the $PS_4^{3-}$ phosphorus proportion) exceeds 50.0%, and from the standpoint of enhancing the ionic conductivity of the sulfide solid electrolyte, the $PS_4^{3-}$ phosphorus proportion is preferably 60.0% or more, more preferably 70.0% or more, and further preferably 80.0% or more, and the upper limit value thereof is not particularly limited, and is preferably close to 100%, but is more preferably 99.5% or less, further preferably 98.0% or less, and still further preferably 95.0% or less, from the standpoint of achieving the easiness in production and the ionic conductivity simultaneously.

The solid electrolyte (A) preferably contains $P_2S_7^{4-}$, and may further contain small amounts of $Li_2S$ and $P_2S_5$ used as the raw materials, $PS_4^{3-}$ as the target material, and $P_2S_6^{4-}$. Among these, $P_2S_6^{4-}$ may lead the decrease in ionic conductivity in the case where the content thereof is increased in the sulfide solid electrolyte, and therefore the content thereof is preferably reduced.

In the step (B), $Li_2S$ and a lithium halide are further added to the solid electrolyte (A) containing $Li_4P_2S_7$ to provide a sulfide solid electrolyte, and thereby the $P_2S_6^{4-}$ phosphorus proportion contained in the sulfide solid electrolyte glass ceramics can be reduced, and the ionic conductivity can be enhanced. In this connection, the $P_2S_7^{4-}$ phosphorus proportion measured by a solid $^{31}P$-NMR spectroscopy in the solid electrolyte (A) is preferably 20.0% by mol or more, more preferably 30.0% by mol or more, and further preferably 35.0% by mol or more, based on the total amount of the solid electrolyte (A), from the standpoint of enhancing the ionic conductivity of the sulfide solid electrolyte glass ceramics, and the upper limit value thereof is not particularly limited, and is 95.0% by mol or less, more preferably 90.0% by mol or less, and further preferably 80.0% by mol or less, since $PS_4^{3-}$ is formed through the treatment of the step (A).

The solid electrolyte (A) may be either an amorphous sulfide solid electrolyte or a crystalline sulfide solid electrolyte, and is preferably a crystalline sulfide solid electrolyte since the crystallite diameter of the sulfide solid electrolyte glass ceramics is increased with a crystalline sulfide solid electrolyte.

(Solid Electrolyte (B))

The solid electrolyte (B) obtained in the present embodiment is the product of the step (B), is a production intermediate of the sulfide solid electrolyte glass ceramics, contains a lithium atom, a sulfur atom, and a phosphorus atom, and preferably contains $PS_4^{3-}$ as the major skeleton.

The solid electrolyte (B) may be either an amorphous sulfide solid electrolyte or a crystalline sulfide solid electrolyte. The amorphous sulfide solid electrolyte can be converted to the sulfide solid electrolyte glass ceramics by heating (crystallization) described later. The crystalline sulfide solid electrolyte can be used as the sulfide solid electrolyte glass ceramics, and may be further heated to proceed further the crystallization.

The solid electrolyte (B) is preferably amorphous. The solid electrolyte (B) contains a halogen atom, and representative preferred examples thereof containing a halogen atom include a solid electrolyte constituted by lithium sulfide, phosphorus sulfide, and a lithium halide, such as $Li_2S$-$P_2S_5$-LiI, $Li_2S$-$P_2S_5$-LiCl, $Li_2S$-$P_2S_5$-LiBr, and $Li_2S$-$P_2S_5$-LiI-LiBr; and a solid electrolyte further containing another atom, such as an oxygen atom and a silicon atom, such as $Li_2S$-$P_2S_5$-$Li_2O$-LiI and $Li_2S$-$SiS_2$-$P_2S_5$-LiI. Among these, a solid electrolyte constituted by lithium sulfide, phosphorus sulfide, and a lithium halide, such as $Li_2S$-$P_2S_5$-LiI, $Li_2S$-$P_2S_5$-LiCl, $Li_2S$-$P_2S_5$-LiBr, and $Li_2S$-$P_2S_5$-LiI-LiBr, is preferred from the standpoint of achieving a higher ionic conductivity.

The kinds of atoms constituting the solid electrolyte (B) can be confirmed, for example, with an ICP emission spectrophotometer.

In the sulfide solid electrolyte glass ceramics of the present embodiment, the $P_2S_6^{4-}$ phosphorus proportion obtained by a solid $^{31}$P-NMR spectroscopy of the solid electrolyte (B) as a production intermediate is preferably 15.0% by mol or less since the ionic conductivity and the water resistance can be enhanced, and is more preferably 10.0% by mol or less, and further preferably 7.0% by mol or less, from the standpoint of enhancing the ionic conductivity and the water resistance, and it is preferred that $P_2S_6^{4-}$ is not contained for enhancing the ionic conductivity and the water resistance and for suppressing the irreversible capacity when made into a battery, and thus the lower limit value thereof is not particularly limited.

In the case where the solid electrolyte (B) obtained in the present embodiment contains at least $Li_2S$-$P_2S_5$, the molar ratio of $Li_2S$ and $P_2S_5$ is preferably 65 to 85/15 to 35, more preferably 70 to 80/20 to 30, and further preferably 72 to 78/22 to 28, from the standpoint of achieving a higher ionic conductivity.

In the case where the solid electrolyte (B) obtained in the present embodiment is, for example, $Li_2S$-$P_2S_5$-LiI-LiBr, the total content of $Li_2S$ and $P_2S_5$ is preferably 60 to 95% by mol, more preferably 65 to 90% by mol, and further preferably 70 to 85% by mol. The proportion of lithium bromide with respect to the total of lithium bromide and lithium iodide is preferably 1 to 99% by mol, more preferably 20 to 90% by mol, further preferably 40 to 80% by mol, and still further preferably 50 to 70% by mol.

In the solid electrolyte (B) obtained in the present embodiment, the mixing ratio (molar ratio) of a lithium atom, a sulfur atom, a phosphorus atom, and a halogen atom is preferably 1.0 to 1.8/1.0 to 2.0/0.1 to 0.8/0.01 to 0.6, more preferably 1.1 to 1.7/1.2 to 1.8/0.2 to 0.6/0.05 to 0.5, and further preferably 1.2 to 1.6/1.3 to 1.7/0.25 to 0.5/0.08 to 0.4. In the case where bromine and iodine are used in combination as the halogen atom, the mixing ratio (molar ratio) of a lithium atom, a sulfur atom, a phosphorus atom, bromine, and iodine is preferably 1.0 to 1.8/1.0 to 2.0/0.1 to 0.8/0.01 to 0.3/0.01 to 0.3, more preferably 1.1 to 1.7/1.2 to 1.8/0.2 to 0.6/0.02 to 0.25/0.02 to 0.25, further preferably 1.2 to 1.6/1.3 to 1.7/0.25 to 0.5/0.03 to 0.2/0.03 to 0.2, and still further preferably 1.35 to 1.45/1.4 to 1.7/0.3 to 0.45/0.04 to 0.18/0.04 to 0.18. In the case where the mixing ratio (molar ratio) of a lithium atom, a sulfur atom, a phosphorus atom, and a halogen atom is in the range, the sulfide solid electrolyte glass ceramics having the thio-LISICON Region II-type crystal structure described later, having a higher ionic conductivity can be easily produced.

The shape of the solid electrolyte (B) is not particularly limited, and examples thereof include a particle form. The average particle diameter ($D_{50}$) of the solid electrolyte (B) in a particle form is, for example, in a range of 0.01 pm to 500 pm or a range of 0.1 to 200 $\mu$m.

The exothermic peak of the sulfide solid electrolyte glass ceramics of the present embodiment is preferably at 120°C or more and 300°C or less, more preferably at 150°C or more and 250°C or less, and further preferably at 170°C or more and 220°C or less.

In the sulfide solid electrolyte glass ceramics of the present embodiment, the exothermic peak appearing first at a temperature of 130°C or more in the temperature rise process in the differential thermal analysis (DTA) of the solid electrolyte (B) as a production intermediate preferably has a full width at half maximum of 8.0°C or less since the ionic conductivity and the water resistance can be enhanced, which is more preferably 7.0°C or less, and further preferably 6.5°C or less.

(Heating)

The production method of the present embodiment preferably further includes heating the amorphous solid electrolyte (A) and the amorphous solid electrolyte (B).

For providing the crystalline solid electrolyte (A) or the sulfide solid electrolyte glass ceramics, the amorphous solid electrolyte (A) or the amorphous solid electrolyte (B) may be obtained and then heated.

More specifically, it is possible that the solid electrolyte (A) obtained in the step (A) is heated to provide the crystalline solid electrolyte (A), which is then used as the raw material in the step (B), and it is possible that after the step (B), the amorphous solid electrolyte (B) obtained in the step (B) is heated to provide the sulfide solid electrolyte glass ceramics.

It is preferred that the solid electrolyte (A) obtained in the step (A) is heated to provide the crystalline solid electrolyte (A), which is then applied to the step (B), since the crystallite diameter of the sulfide solid electrolyte glass ceramics can be increased.

In the case where the amorphous solid electrolyte (B) is heated to provide the sulfide solid electrolyte glass ceramics, the heating temperature may be determined depending on the structure of the sulfide solid electrolyte glass ceramics, and specifically, the amorphous solid electrolyte (B) is preferably heated to a temperature lower by 5°C or more, more preferably a temperature lower by 7°C or more, and further preferably a temperature lower by 10°C or more, than the peak top temperature of the exothermic peak observed on the lowest temperature side at 130°C or more in a differential thermal analysis (DTA) under a temperature rise condition of 10°C/min with a differential thermal analysis equipment (DTA equipment), and the lower limit thereof is not particularly limited, and is preferably a temperature within 30°C on the low temperature side, and more preferably within 25°C on the low temperature side. In the case where the heating temperature is in the range, the sulfide solid electrolyte glass ceramics can be obtained more efficiently and securely.

In the case where the amorphous solid electrolyte (A) is heated to provide the crystalline solid electrolyte (A), the heat treatment is performed at around the peak top of the exothermic peak in a differential thermal analysis (DTA) under a temperature rise condition of 10°C/min with a differential thermal analysis equipment (DTA equipment). The preferred heating temperature is in a range of -50°C to 100°C, more preferably in a range of -30°C to 80°C, and further preferably in a range of -15°C to 65°C, from the temperature of the exothermic peak top.

The heating temperature for providing the crystalline sulfide solid electrolyte (A) or the sulfide solid electrolyte glass ceramics cannot be determined unconditionally since the heating temperature may vary depending on the structure of the crystalline sulfide solid electrolyte (A) or the sulfide solid electrolyte glass ceramics to be provided, and in general, the heating temperature is preferably 130°C or more, more preferably 135°C or more, and further preferably 140°C or more, and the upper limit thereof is not particularly limited, and is preferably 350°C or less, more preferably 330°C or less, and further preferably 320°C or less.

The heating time is not particularly limited, as far as the target crystalline solid electrolyte (A) or the target sulfide solid electrolyte glass ceramics can be obtained thereby, and for example, is preferably 1 minute or more, more preferably 10 minutes or more, further preferably 30 minutes or more, and still further preferably 1 hour or more. The upper limit of the heating time is not particularly limited, and is preferably 24 hours or less, more preferably 10 hours or less, further preferably 5 hours or less, and still further preferably 3 hours or less.

The heating is preferably performed in an inert gas atmosphere (such as a nitrogen atmosphere and an argon atmosphere) or a reduced pressure atmosphere (particularly in vacuum) since the deterioration (for example, oxidation) of the product can be prevented. The method of heating is not particularly limited, and examples thereof include methods using a hot plate, a vacuum heating device, an argon gas atmosphere furnace, and a baking furnace. In an industrial scale, a horizontal dryer having heating means and a feeding mechanism, and a horizontal vibration fluid dryer, and the like may also be used, which may be appropriately selected depending on the processing amount.

(Pulverization)

The present embodiment preferably further includes pulverizing the solid electrolyte (A), the solid electrolyte (B), or the sulfide solid electrolyte glass ceramics, and also preferably includes plural pulverizing steps. The solid electrolyte (A), the solid electrolyte (B), or the sulfide solid electrolyte glass ceramics may be pulverized, and thereby the sulfide solid electrolyte glass ceramics having a small particle diameter can be obtained while preventing the ionic conductivity from being decreased.

The pulverizer used for the pulverization in the present embodiment is not particularly limited, as far as the particles can be pulverized thereby, and for example, a medium type pulverizer using a pulverization medium may be used.

The pulverizer used may be a dry medium type pulverizer, such as a dry bead mill, a dry ball mill, and a dry vibration mill, or a dry non-medium type pulverizer, such as a jet mill, and in the case of the slurry containing a solvent, representative examples thereof include a wet bead mill, a wet ball mill, and a wet vibration mill, in which a dry bead mill or a wet bead mill using beads as a pulverization medium is preferred since the condition of the pulverization operation can be freely controlled, and the particles having a smaller particle diameter can be provided.

The size of the beads used in the pulverizer may be appropriately selected depending on the target particle diameter, and the processing amount, and for example, the diameter of the beads may be approximately 0.05 mmφ or more and 5.0 mmφ or less, preferably 0.1 mmφ or more and 3.0 mmφ or less, and more preferably 0.3 mmcp or more and 1.5 mmφ or less.

The pulverizer used in pulverization in the present embodiment may be an equipment capable of pulverizing an object with an ultrasonic wave, such as equipments referred to as an ultrasonic pulverizer, an ultrasonic homogenizer, and a probe type ultrasonic pulverizer.

In this case, the conditions of the ultrasonic wave, such as the frequency, may be appropriately selected depending on the average particle diameter of the target complex, and the like, and the frequency may be, for example, approximately 1 kHz or more to 100 kHz or less, and is preferably 3 kHz or more and 50 kHz or less, more preferably 5 kHz or more and 40 kHz or less, and further preferably 10 kHz or more and 30 kHz or less, from the standpoint of pulverizing the complex more efficiently.

The output power of the ultrasonic pulverizer may be generally approximately 500 to 16,000 W, and is preferably 600 to 10,000 W, more preferably 750 to 5,000 W, and further preferably 900 to 1,500 W.

The average particle diameter ($D_{50}$) of the complex obtained through the pulverization may be appropriately determined depending on necessity, and is generally 0.01 pm or more an 50 $\mu$m or less, preferably 0.03 pm or more and 5 $\mu$m or less, and more preferably 0.05 pm or more and 3 pm or less. With the average particle diameter, the demand of a solid electrolyte having a small particle diameter, for example, an average particle diameter of 1 pm or less, can be addressed.

The period of time of the pulverization is not particularly limited, as far as the complex can have the target average particle diameter within the time, and the period of time is generally 0.1 hour or more and 100 hours or less, and is preferably 0.3 hour or more and 72 hours or less, more preferably 0.5 hour or more and 48 hours or less, and further preferably 1 hour or more and 24 hours or less, from the standpoint of achieving the target particle diameter efficiently.

[Positive Electrode Mixture and Negative Electrode Mixture]

In the case of the use in a positive electrode layer or a negative electrode layer, the sulfide solid electrolyte glass ceramics may be heated with an active substance, and thereby a positive electrode mixture or a negative electrode mixture having the sulfide solid electrolyte attached to the surface of the active substance can be obtained.

The positive electrode active substance used is not particularly limited, as far as the substance is capable of accelerating the battery chemical reaction associated with migration of lithium ions derived from a lithium atom that is preferably used as an atom exhibiting the ionic conductivity in the present embodiment, in relation to the negative electrode active substance. Examples of the positive electrode active substance capable of performing insertion and extraction of lithium ions include an oxide-based positive electrode active substance and a sulfide positive electrode active substance.

Preferred examples of the oxide-based positive electrode active substance include a lithium-containing transition metal composite oxide, such as LMO (lithium manganate), LCO (lithium cobaltate), NMC (lithium nickel manganese cobalt oxide), NCA (lithium nickel cobalt aluminum oxide), LNCO (lithium nickel cobalt oxide), and an olivine type compound ($LiMeNPO_4$, wherein Me represents Fe, Co, Ni, or Mn).

Examples of the sulfide positive electrode active substance include elemental sulfur ($S_8$), lithium sulfide ($Li_2S$), polysulfide ($Li_2S_x$), titanium sulfide ($TiS_2$), molybdenum sulfide ($MoS_2$), iron sulfide (FeS and $FeS_2$), cupper sulfide (CuS), and nickel sulfide ($Ni_3S_2$).

In addition to the positive electrode active substances described above, niobium selenide ($NbSe_3$) may also be used in combination.

In the present embodiment, the active substances may be used alone or in combination of two or more.

The negative electrode material used is not particularly limited, as far as the substance is capable of accelerating the battery chemical reaction associated with migration of lithium ions derived from an atom that is preferably used as an atom exhibiting the ionic conductivity in the present embodiment, preferably a metal capable of forming an alloy with a lithium atom, an oxide thereof, an alloy of the metal and a lithium atom, or the like, preferably a lithium atom. The negative electrode active substance capable of performing insertion and extraction of lithium ions may be the negative electrode active substances having been known in the field of batteries.

Examples of the negative electrode active substance include graphite, metallic lithium or a metal capable of forming an alloy with lithium, such as metallic lithium, metallic indium, metallic aluminum, metallic silicon, and metallic tin, an oxide of the metal (such as lithium titanate), and an alloy of the metal and metallic lithium.

The electrode active substance used in the present embodiment may have a covering layer coated on the surface thereof.

Examples of the material for forming the covering layer include a nitride, an oxide, and a composite thereof of an atom exhibiting ionic conductivity in the crystalline sulfide solid electrolyte used in the present embodiment, preferably a lithium atom. Specific examples thereof include a conductor having a LISICON type crystal structure, such as $Li_{4-2x}Zn_xGeO_4$, having lithium nitride ($Li_3N$) and $Li_4GeO_4$ as the major structure, a conductor having a thio-LISICON type crystal structure, such as $Li_{4-x}Ge_{1-x}P_xS_4$, having a $Li_3PO_4$ type skeleton structure, a conductor having a perovskite type crystal structure, such as $La_{2/3-x}Li_{3x}TiO_3$, and a conductor having a NASICON type crystal structure, such as $LiTi_2(PO_4)_3$.

Examples thereof also include oxide-based conductors, for example, lithium titanate, such as $Li_y$-$Ti_{3-y}O_4$ (0 < y < 3) and $Li_4Ti_5O_{12}$ (LTO), a metal oxide lithium of a metal of the group 5 of the periodic table, such as $LiNbO_3$ and $LiTaO_3$, and a $Li_aO$-$B_2O_3$-$P_2O_5$-based material, a $Li_2O$-$B_2O_3$-ZnO-based material, and a $Li_2O$-$Al_2O_3$-$SiO_2$-$P_2O_5$-$TiO_2$-based material.

The electrode active substance having the covering layer can be obtained, for example, in such a manner that a solution containing atoms constituting the material for forming the covering layer is attached to the surface of the electrode active substance, and the electrode active substance having the solution attached thereto is baked at preferably 200°C or more and 400°C or less.

The solution containing the atoms may be a solution containing alkoxides of the metals, such as lithium ethoxide, titanium isopropoxide, niobium isopropoxide, and tantalum isopropoxide. In this case, the solvent used may be an alcohol-based solvent, such as ethanol and butanol; an aliphatic hydrocarbon solvent, such as hexane, heptane, and octane; and an aromatic hydrocarbon solvent, such as benzene, toluene, and xylene.

The attaching may be performed by dipping and spray coating.

The baking temperature is preferably 200°C or more and 400°C or less as described above, and more preferably 250°C or more and 390°C or less, from the standpoint of enhancing the production efficiency and the battery capabilities, and the baking time is generally approximately 1 minute to 10 hours, and preferably 10 minutes to 4 hours.

The coverage of the covering layer is preferably 90% or more, more preferably 95% or more, and further preferably 100%, i.e., the entire surface covered, based on the surface area of the electrode active substance. The thickness of the covering layer is preferably 1 nm or more, and more preferably 2 nm or more, and the upper limit thereof is preferably 30 nm or less, and more preferably 25 nm or less.

The thickness of the covering layer can be measured by observing the cross section with a transmission electron microscope (TEM), and the coverage can be calculated from the thickness of the covering layer, the atomic analysis values, and the BET surface area.

The battery preferably uses a collector, in addition to the positive electrode layer, the electrolyte layer, and the negative electrode layer, and the known collector may be used therefor. Examples thereof include a layer capable of reacting with the sulfide solid electrolyte, such as Au, Pt, Al, Ti, or Cu, coated with Au or the like.

The battery characteristics of the battery using the sulfide solid electrolyte glass ceramics of the present embodiment can be evaluated, for example, by the irreversible capacity in the initial cycle calculated from the CV measurement. The irreversible capacity is preferably small since the capacity of the battery is close to the theoretical capacity. The irreversible capacity can be measured by the method described in the examples.

The irreversible capacity is generally 70 mAh/g or less, preferably 60 mAh/g or less, more preferably 50 mAh/g or less, and further preferably 45 mAh/g or less.

Examples

The present invention will be described specifically with reference to examples below, but the present invention is not limited to the examples.

(1) Description of Measurement Methods

(1-1) X-ray Diffractometry (XRD) (Peak Position)

The resulting solid electrolyte was measured by XRD.

The powder of the solid electrolyte produced in each of the examples was charged in a groove having a diameter of 20 mm and a depth of 0.2 mm, and flattened with glass to prepare a specimen. The specimen was sealed with a Kapton film for XRD, and measured while avoiding contact with air.

The measurement was performed with D2 PHASER, a powder X-ray diffractometer, available from Bruker Corporation, under the following condition.

Tube voltage: 30 kV
Tube current: 10 mA
X-ray wavelength: Cu-Ka line (1.5418 Å)
Optical system: Focusing method

Slit configuration: Soller slits 4° (for both incident side and receiving side), divergence slit 1 mm, Kβ filter (Ni plate 0.5%), air scatter screen 3 mm

Detector: Semiconductor detector
Measurement range: $2\theta$ = 10 to 60 deg
Step width and scan speed: 0.05 deg and 0.05 deg/sec

(1-2) X-ray Diffractometry (XRD) (Crystallite Diameter)

The crystallite diameter (L) was obtained according to the method of P. Scherrer, et al. Specifically, the crystallite diameter was obtained by calculating by the following expression with the result obtained by measuring in the same manner as in the item {1-1).

$$\text{Crystallite diameter } (L) = K\lambda/(\beta \cdot \cos\theta)$$

K: constant 0.9

λ: 1.5418 Å (Cu-Kα line)

β: calculated from β = w-B

w: Full width at half maximum of 23.6° peak obtained by measurement

B: Apparatus constant (Standard substance (silicon) was measured in the same manner as in the item (1-1), B = 0.1497° was obtained from the peak at 2θ = 28.5°)

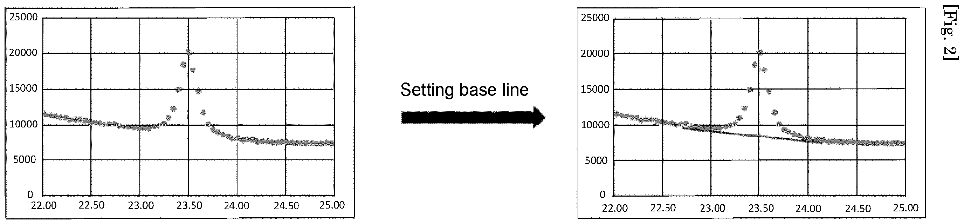

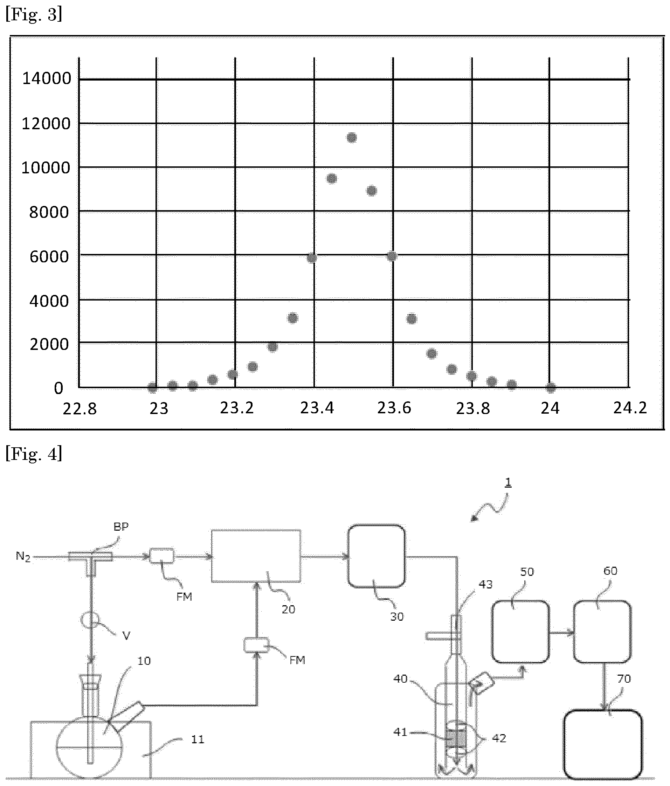

The value w (full width at half maximum obtained by measurement) was obtained in the following manner. In the peak shape obtained by XRD, a straight base line was set (see Fig. 2), and the differences between the points and the base line were obtained to provide an XRD curve (see Fig. 3). The XRD curve was assumed by the formula (f(x) = (1-α)×L(x)+α×G(x)) composed of the Lorenz function L(x) and the Gauss function G(x), and the parameters A, w, $x_0$, and α were determined by curve fitting.

$$L(x) = A \frac{w^2}{4(x-x_0)^2 + w^2}$$

$$G(x) = A \exp\left( -4 \ln 2 \frac{(x-x_0)^2}{w^2} \right)$$

(1-3) Inductively Coupled Plasma (ICP) Emission Spectrophotometer

(Determination of Composition)

The powder of the sulfide solid electrolyte was weighed and collected in a vial container in an argon atmosphere. A KOH alkaline aqueous solution was placed in the vial container to dissolve the specimen while caring for collection of sulfur, which is appropriately diluted to prepare a measurement solution. The resulting measurement solution was measured with a Paschenrunge ICP-OES equipment (Spectro Arcos, available from SPECTRO Analytical Instruments GmbH), so as to determine the composition.

The calibration curve solutions for Li, P, and S were 1,000 mg/L standard solutions for ICP measurement, that for Br was a 1,000 mg/L standard solution for ion chromatography for Br, and that for I was prepared with potassium iodide (guaranteed reagent).

Two measurement solutions were prepared for each of the sulfide solid electrolytes, the measurement solutions each were measured four times, and the average value was calculated. The composition was determined from the average of the measured values of the two measurement solutions.

The ratio ($I_{Li2S}/I_{P2S5}$) of the molar fraction ($I_{Li2S}$) of $Li_2S$ and the molar fraction ($I_{P2S5}$) of $P_2S_5$ was calculated from the resulting elemental ratios.

(1-4) Measurement of Ionic Conductivity

In the present examples, the ionic conductivity was measured in the following manner.

The sulfide solid electrolyte was molded into a circular pellet having a diameter of 10 mm (cross sectional area S: 0.785 $cm^2$) and a height (L) of 0.1 to 0.3 cm to prepare a specimen. Electrode terminals were attached to the upper and lower ends of the specimen, and the specimen was measured by the alternating current impedance method at 25°C (frequency range: 1 MHz to 100 Hz, amplitude: 10 mV) to provide a Cole-Cole plot. The real part Z' (SZ) at the point at which -Z" (SZ) became minimum near the right end of the arc observed in the high frequency side region was designated as the bulk resistance R (SZ) of the electrolyte, and the ionic conductivity σ (S/cm) was calculated according to the following expressions.

$$R = \rho(L/S)$$

$$\sigma = 1/\rho$$

(1-5) Solid $^{31}$P-NMR Spectroscopy

Apparatus: ECZ400R (available from JEOL, Ltd.)
Observed nucleus: $^{31}$P
Observation frequency: 161.994 MHz
Measurement temperature: room temperature
Pulse series: single pulse
90° pulse width: 3.2 ps
Wait time from FID measurement to next pulse: 60 s
Rotation number of MAS (magic angle spinning): 11 kHz
Cumulated number: 64
Measurement range: 250 ppm to -150 ppm
Amount of specimen: 100 mg
External reference: $NH_4H_2PO_4$ (chemical shift: 1.00 ppm)

(1-5-1) Measurement of Amorphous Sulfide Solid Electrolyte

The peak signals derived from the phosphorus-containing structures each were extracted from the $^{31}$P-NMR spectrum through waveform separation using the non-linear least squares method. The proportions of phosphorus contained in the phosphorus-containing structures (phosphorus proportions (% by mol)) with respect to the total phosphorus were measured. The waveform separation was performed on the assumption that the chemical shifts of the phosphorus-containing structures were as shown in Table 1. In the table, the areas (e.g., Sp1 and Sp2) mean the areas of the peaks obtained through the waveform separation.

Table 1

| Attribute | Chemical shift (ppm) | Function used for optimization | Area |
|---|---|---|---|
| $PS_4^{3-}$ glass | 82-85 | Gauss function | Sp1 |
| $P_2S_6^{4-}$ glass | 102-108 | Gauss function | Sp2 |
| $P_2S_7^{4-}$ glass | 91.4 | Gauss function | Sp3 |

$$PS_4{}^{3-} \text{ phosphorus proportion (\%): } 100 \times Sp1/(Sp1+Sp2+Sp3)$$

$$P_2S_6{}^{4-} \text{ phosphorus proportion (\%): } 100 \times Sp2/(Sp1+Sp2+Sp3)$$

$$P_2S_7{}^{4-} \text{ phosphorus proportion (\%): } 100 \times Sp3/(Sp1+Sp2+Sp3)$$

(1-5-2) Measurement of Crystalline Solid Electrolyte (A)

The phosphorus proportions were obtained in the manner according to the item (1-5-1) except that the chemical shifts of the phosphorus-containing structures were as shown in Table 2.

Table 2

| Attribute | Chemical shift (ppm) | Function used for optimization | Area |
|---|---|---|---|
| $P_2S_7^{4-}$ glass | 91.4 | Gauss function | Sp1 |
| $P_2S_7^{4-}$ crystals | 90-91 | Gauss function | Sp2 |
| $PS_4^{3-}$ crystals | 86-87.5 | pseudo-Voigt function | Sp3 |
| $P_2S_6^{4-}$ crystals | 108-110 | Gauss function | Sp4 |

(continued)

| Attribute | Chemical shift (ppm) | Function used for optimization | Area |
|---|---|---|---|
| Unknown peak (1) | 92-93 | pseudo-Voigt function | Sp5 |
| Unknown peak (2) | 88.5-89.5 | Gauss function | Sp6 |

The $P_2S_7^{4-}$ phosphorus proportion was defined as the sum of the proportion of the $P_2S_7^{4-}$ glass phosphorus and the proportion of the $P_2S_7^{4-}$ crystal phosphorus.

In the case where the peak of the $PS_4^{3-}$ crystal was not sufficiently optimized by one pseudo-Voigt function, the waveform was separated by two pseudo-Voigt functions.

(1-5-3) Measurement of Sulfide Solid Electrolyte Glass Ceramics of Present Invention

The phosphorus proportions were obtained in the manner according to the item (1-5-1) except that the chemical shifts of the phosphorus-containing structures were as shown in Table 3.

Table 3

| Attribute | Chemical shift (ppm) | Function used for optimization | Area |
|---|---|---|---|
| $P_2S6^{4-}$ glass | 102-108 | Gauss function | Sp1 |
| R II analogous crystals (1) | fixed to peak position of 88.5-91.5 | Gauss function | Sp2 |
| β analogous crystals | 86-87 | Gauss function | Sp3 |
| Low ionic conductivity crystals | 82-85 | Gauss function | Sp4 |
| R II analogous crystals (2) | 75-79 | pseudo-Voigt function | Sp5 |

(1-6) Differential Thermal Analysis (DTA) (Determination of Full Width at Half Maximum)

Equipment: TGA/DSC3+, available from Mettler Toled, Inc.
Measurement condition: under $N_2$ gas flow at 60 mL/min, retained at 25°C for 10 minutes, then heated to 600°C at 10°C/min

The DTA measurement of the amorphous material was performed. Focusing on the exothermic peak appearing first at 130°C or more in the temperature rise process, a straight base line was set for the exothermic peak curve, and the differences between the points and the base line were obtained to provide a DTA curve (which was the same as the method for determining the XRD curve in the item (1-2)). The curve fit of the curve was tried to perform by the Lorenz function and the Gauss function, but no good approximate curve was obtained, and the temperatures $T_H$ and $T_L$ (wherein $T_H > T_L$) providing the half value of the peak value of the DTA curve were obtained, and the difference thereof was designated as the full width at half maximum.

(1-7) Differential Thermal Analysis (DTA) (Peak Temperature and Heat Quantity)

The DTA measurement of the sulfide solid electrolyte glass ceramics was performed (condition: see item (1-6)). Focusing on the exothermic peak appearing at 350°C or less, a straight base line was set for the exothermic peak curve, and the differences between the points and the base line were obtained to provide a DTA curve, in the same manner as shown in the item (1-6). The peak temperature (°C) and the heat quantity (W/g) were read from the curve.

(1-8) Evaluation of Water Resistance ($H_2S$ Generating Amount)

The exposure test equipment (Fig. 4) included, as major constitutional components, a flask 10 humidifying nitrogen, a static mixer 20 mixing humidified nitrogen and non-humidified nitrogen, a dew point hygrometer 30 (M170/DMT152, available from Vaisala Oyj.) measuring the water content of mixed nitrogen, a double reaction tube 40 having a measurement specimen placed therein, a dew point hygrometer 50 measuring the water content of nitrogen discharged from the double reaction tube 40, and a hydrogen sulfide meter 60 (Model 3000RS, available from Advanced Micro Instruments Inc.) measuring the concentration of hydrogen sulfide contained in the discharged nitrogen, and had a configuration in which the constitutional components were connected with tubes (not shown in the figure). The temperature of the flask 10 was regulated to 10°C with a cooling tank 11.

The tubes used for connecting the constitutional components were Teflon (registered trademark) tubes having a diameter of 6 mm. In Fig. 4, the display of the tubes is omitted, and the flow of nitrogen is shown by the arrows instead.

The evaluation was performed in the following procedure.

In a nitrogen glove box having a dew point regulated to -80°C, approximately 0.15 g of a powder specimen 41 was weighed, and placed and sealed inside the reaction tube 40 by holding with quartz wool 42.

Nitrogen was supplied to the equipment 1 at 0.02 MPa from a nitrogen source (not shown in the figure). A part of the supplied nitrogen was supplied to the flask 10 through a branched pipe BP, and humidified. The other part thereof was supplied as non-humidified nitrogen directly to the static mixer 20. The supplying amount of nitrogen to the flask 10 was regulated with a needle valve V.

The flow rates of the humidified nitrogen and the non-humidified nitrogen were regulated with flow meters FM equipped with a needle valve, thereby regulating the dew point. Specifically, the non-humidified nitrogen and the humidified nitrogen were supplied to the static mixer 20 at a flow rate of 800 mL/min and a flow rate of 10 to 30 mL/min, respectively, and mixed therein, and the dew point of the mixed gas (i.e., the mixture of the non-humidified nitrogen and the humidified nitrogen) was confirmed with the dew point hygrometer 30.

After regulating the dew point to -20°C, the three-way valve 43 was rotated to allow the mixed gas to flow inside the reaction tube 40 for 4 hours. The amount of hydrogen sulfide contained in the mixed gas having flowed through the specimen 41 was measured with the hydrogen sulfide meter 60. The amount of hydrogen sulfide generated in this period was obtained in terms of amount per 1 g of the specimen (unit: cc/g). The gas after the measurement was allowed to pass through an alkali trap 70 for removing hydrogen sulfide.

After exposing the specimen for a prescribed period of time, the supply of the humidified nitrogen was terminated, and the reaction tube 40 was sealed with the non-humidified nitrogen.

(1-9) CV Measurement (Irreversible Capacity)

The following cell for CV measurement was used for evaluating the irreversible capacity.

0.3846 g of the sulfide solid electrolyte glass ceramics of each of Examples and Comparative Examples and 0.1154 g of particulate Denka Black (available from Denka Co., Ltd.) (mass ratio (sulfide solid electrolyte glass ceramics)/(particulate Denka Black) = 50/15) were mixed with a mortar for 10 minutes to prepare measurement powder (1).

In a battery cell having a diameter of 10 mm, 60 mg of an electrolyte for a separator was added and pressed at 2.55 MPa/cm$^2$ three times with a stainless steel mold, and then 3.5 mg of the measurement powder (1) was added and pressed at 5.10 MPa/cm$^2$ three times. The measurement powder (1) was further pressed from the opposite side three times at 2.55 MPa/cm$^2$, 5.10 MPa/cm$^2$, and 7.64 MPa/cm$^2$.

The electrolyte for a separator for CV measurement was synthesized under the following condition.

In a 1 L reaction vessel equipped with an impeller, 20.5 g of $Li_2S$, 33.1 g of $P_2S_5$, 10.0 g of LiI, and 6.5 g of LiBr were added under a nitrogen atmosphere. After rotating the impeller, 630 g of toluene was added thereto, and the slurry was agitated for 10 minutes. The reaction vessel was connected to a bead mill capable of performing a cycle operation (Starmill LMZ015, a trade name, available from Ashizawa Finetech Ltd., filled with 456 g of zirconia beads having a diameter of 0.5 mm), and a pulverization treatment was performed at a pump flow rate of 650 mL/min, a bead mill peripheral speed of 12 m/s, and a mill jacket temperature of 45°C for 45 hours. The resulting slurry was dried in vacuum at room temperature (25°C), and then heated to 80°C to provide white powder of an amorphous solid electrolyte. The resulting white powder was further heated in vacuum to 195°C for 2 hours to provide white powder of a crystalline solid electrolyte. In the XRD spectrum of the crystalline solid electrolyte, crystallization peaks were detected at $2\theta$ = 20.2° and 23.6°, from which it was confirmed that a thio-LISICON Region II-type crystal structure was contained. The resulting crystalline solid electrolyte had an average particle diameter ($D_{50}$) of 4.5 pm and a conductivity of 5.0 mS/cm.

An InLi foil (having a layer structure of In 10 mm$\varphi$ × 0.1 mm / Li 9 mm$\varphi$ × 0.1 mm / In 9.5 mm$\varphi$ × 0.1 mm / Li 9 mm$\varphi$ × 0.1 mm / In 9.5 mm$\varphi$ × 0.1 mm, wherein / means the boundary of the layers) was provided on the side of the electrolyte for a separator opposite to the measurement powder (1), and a Ti foil was provided to prevent adhesion to the stainless steel mold. The assembly in this state was pressed once at 1.27 MPa/cm$^2$. The cell was fixed with four screws with an insulator for preventing short-circuit between the measurement powder (1) and the InLi foil, and the screws were fixed at a torque of 8 Nm to provide a measurement cell.

The resulting measurement cell was connected to a measurement device (VSP-3, available from Bio-Logic Science Instruments, Ltd.), and the CV curve was obtained under the following condition.

Measurement temperature: 25°C

Sweep rate: 0.1 mV/s
Measured range of potential: open circuit voltage (ca. +1.9 V) => +5.0 V => +1.8V

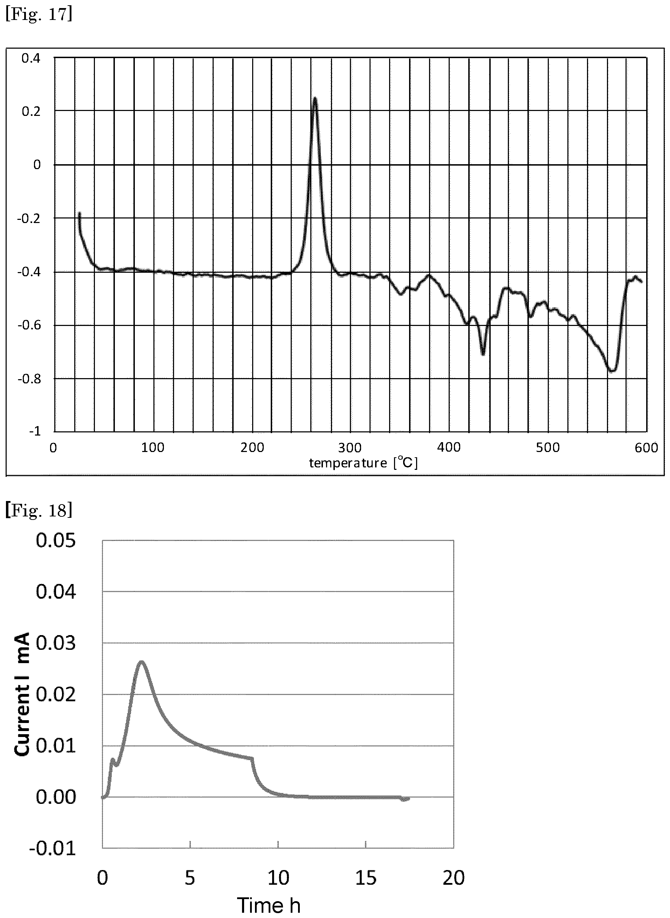

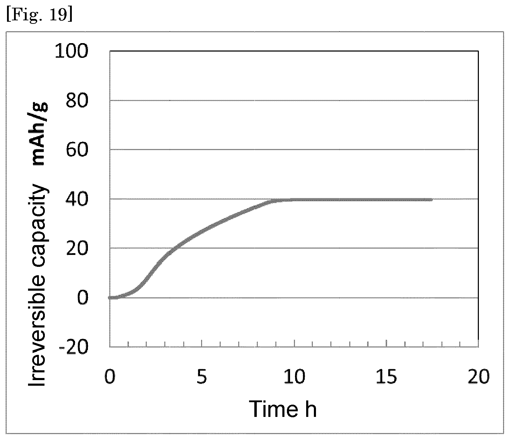

The resulting CV curve was replotted for the current I (mA) and the time (Fig. 18). The capacity of the sulfide solid electrolyte glass ceramics used per unit mass was calculated therefrom, and accumulated to provide a saturated capacity, which was designated as the irreversible capacity (mAh/g) (Fig. 19).

(1-10) Average Particle Diameter ($D_{50}$)

The volume-based average particle diameter was measured with a laser diffraction-scattering particle diameter distribution measuring equipment (Partica LA-950 V2, Model LA-950 W2, available from Horiba, Ltd.). Toluene (guaranteed reagent, available from Wako Pure Chemical Industries, Ltd.) and tert-butyl alcohol (guaranteed reagent, available from Wako Pure Chemical Industries, Ltd.), which had been dehydrated, were mixed at a weight ratio of 93.8/6.2 to prepare a dispersion medium. 50 mL of the dispersion medium was charged and circulated in the flow cell of the equipment, then the measurement object was added and subjected to an ultrasonic treatment, and the particle diameter distribution was measured. The amount of the measurement object added was regulated in such a manner that in the measurement screen defined in the equipment, the red light transmittance (R) corresponding to the particle concentration fell in a range of 90 to 90%, and the blue light transmittance (B) corresponding thereto fell in a range of 70 to 90%. The computing condition included a refractive index of the measurement object of 2.16 and a refractive index of the dispersion medium of 1.49. The particle diameter was computed with an iteration number fixed to 15 in the configuration of the distribution mode.

(2) Production Example of Lithium Sulfide ($Li_2S$) and Diphosphorus Pentasulfide ($P_2S_5$)

(2-1) Production Example of Lithium Sulfide ($Li_2S$)

(2-1-1) Production of $Li_2S$

303.8 kg of toluene (available from Sumitomo Corporation) having been dehydrated (the water content of which had been measured with a Karl Fischer aquameter and confirmed to be 100 ppm or less) was added to a 500 L stainless steel reaction kettle under a stream of nitrogen, to which 33.8 kg of anhydrous lithium hydroxide (available from Honjo Chemical Corporation) was subsequently added, and the mixture was agitated with a TWINSTIR impeller at 95°C and 131 rpm for 2 hours to provide a slurry.
Under the continuous agitation, the slurry was heated to 104°C while hydrogen sulfide (available from Sumitomo Seika Chemicals Co., Ltd.) was blown therein at a feeding rate of 100 L/min. An azeotropic gas of water and toluene was continuously discharged from the reaction kettle. The azeotropic gas was dehydrated by condensing with a condenser outside the system. In this period, toluene was continuously fed in the same amount of distilled toluene, so as to keep the reaction liquid level constant.
The water amount in the condensate was gradually decreased, and after 24 hours from the introduction of hydrogen sulfide, no distillation of water was observed. During the reaction, the solid matter was dispersed in toluene and agitated, and no water separated from toluene was observed.
Thereafter, nitrogen was allowed to flow at 100 L/min for 1 hour instead of hydrogen sulfide.
The resulting solid matter was filtered and dried to provide white powder of $Li_2S$. The $D_{50}$ of $Li_2S$ was 412 $\mu$m.

(2-1-2) Pulverization of $Li_2S$

$Li_2S$ obtained in the item (2-1-1) was pulverized with a pin mill having a constant rate feeder (100UPZ, available from Hosokawa Micron Corporation) under a nitrogen atmosphere. The addition rate was 80 g/min, and the rotation speed of the circular plate was 18,000 rpm.
The $D_{50}$ of $Li_2S$ after pulverization was 7.7 pm.

(2-2) Production Example of Pentasulfide ($P_2S_5$)

(2-2-1) Pulverization of PaSs

Pulverization was performed in the same manner as in the item (2-1-2) except that $P_2S_5$ (available from Thermphos International B.V., $D_{50}$: 125 pm) was used instead of $Li_2S$ obtained in the item (2-1-1).
The $D_{50}$ of $P_2S_5$ after pulverization was 8.7 pm.

(Example 1)

Step (A)

0.488 g (45.947 g/mol, 0.01062 mol) of $Li_2S$ produced in the item (2-1-2), 1.012 g (222.272 g/mol, 0.00455 mol) of $P_2S_5$ produced in the item (2-2-2), and 10 zirconia balls having a diameter of 10 mm (approximately 32 g) were placed in a zirconia pot (45 mL) of a planetary ball mill (Model P-7, available from Fritsch GmbH), and after tightly sealing, the interior of the pot was allowed to be an argon atmosphere. With no heating or cooling, the planetary ball mill was operated at a rotation number of 370 rpm for 40 hours (mechanical milling) to provide powder (solid electrolyte (A1)).

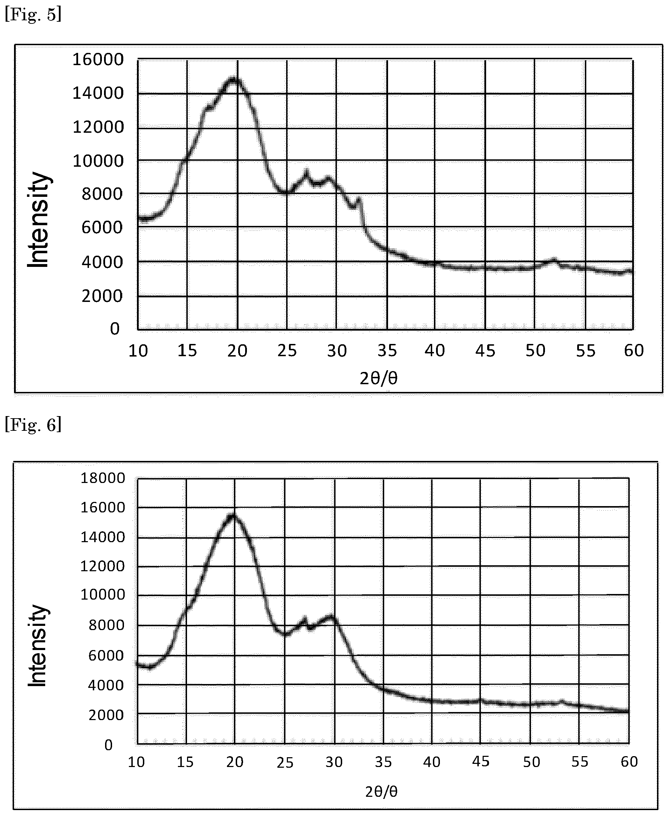

The resulting powder was confirmed to be an amorphous solid electrolyte by an X-ray diffractometry (XRD) (Fig. 5). The $P_2S_7^{4-}$ phosphorus proportion was evaluated by a solid $^{31}$P-NMR spectroscopy (Table 4).

Step (B)

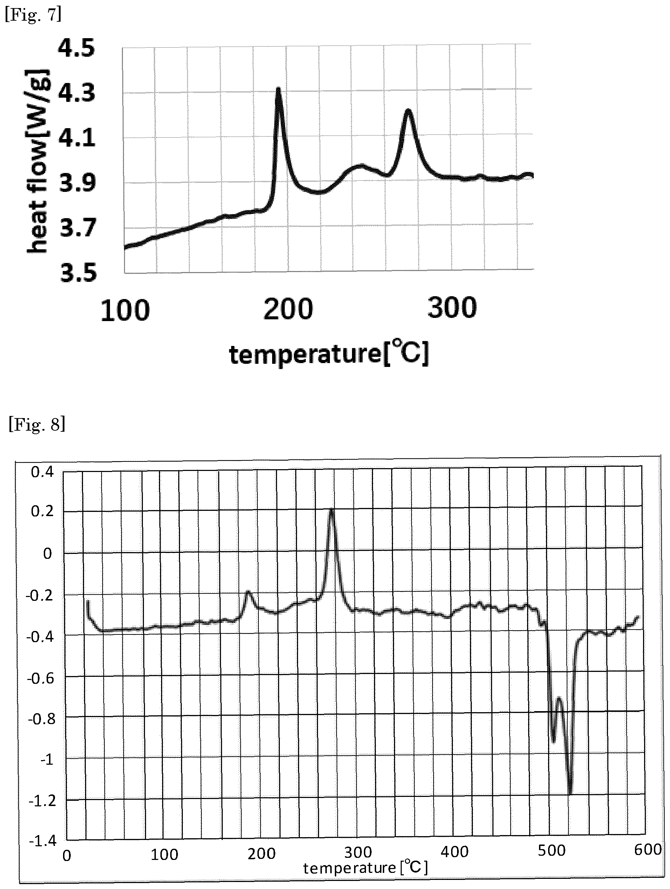

An amorphous solid electrolyte (B1) was obtained in the same manner as in the step (A) described above except that 1.035 g of the solid electrolyte (A1) obtained in the step (A) was weighed, to which 0.096 g (0.00209 mol) of $Li_2S$ and 0.369 g (133.845 g/mol, 0.00276 mol) of LiI as the lithium halide were added. The results of the X-ray diffractometry (XRD) and the differential thermal analysis (DTA) of the amorphous solid electrolyte (B1) are shown in Figs. 6 and 7, respectively. The $P_2S_6^{4-}$ phosphorus proportion was evaluated by a solid $^{31}$P-NMR spectroscopy, and the temperature and the full width at half maximum of the exothermic peak appearing first at 130°C or more in the temperature rise process were evaluated by a differential thermal analysis (DTA) (Table 4).

Heating (Crystallization) Step

The entire amount of the amorphous solid electrolyte (B1) obtained in the step (B) was heated to 180°C for 2 hours with a hot plate in a glove box having an argon atmosphere.

Thereafter, the solid electrolyte was gradually cooled, and pulverized with a mortar in a glove box having an argon atmosphere, so as to provide powder (sulfide solid electrolyte glass ceramics (1)). The result of the differential thermal analysis (DTA) of the sulfide solid electrolyte glass ceramics (1) is shown in Fig. 8.

In the X-ray diffractometry (XRD) of the resulting powder (Fig. 9), peaks derived from the crystal structure similar to the thio-LISICON Region II-type crystal structure were observed at $2\theta = 20.2°$ and $23.6°$. The crystallite diameter is shown in Table 4.

The $P_2S_6^{4-}$ phosphorus proportion by a solid $^{31}$P-NMR spectroscopy, the temperature and the intensity (heat quantity) of the exothermic peak appearing at 350°C or less in the differential thermal analysis (DTA), and the ratio $I_{Li2S}/I_{P2S5}$ calculated from the elemental ratios measured by the ICP measurement are shown in Table 5. The ionic conductivity (shown as "conductivity" in the table), the water resistance (shown as "$H_2S$ generating amount" in the table), and the irreversible capacity were evaluated in the manner shown above (Table 5).

(Comparative Example 1)

0.433 g (0.00942 mol) of $Li_2S$ produced in the item (2-1-2), 0.698 g (0.00314 mol) of $P_2S_5$ produced in the item (2-2-2), 0.369 g (0.00276 mol) of LiI as the lithium halide, 53 g of zirconia balls having a diameter of 2 mm, and ethylbenzene (5 mL) as a solvent were placed in a zirconia pot (45 mL) of a planetary ball mill (Model P-7, available from Fritsch GmbH), and after tightly sealing, the interior of the pot was allowed to be an argon atmosphere. With no heating or cooling, the planetary ball mill was operated at a rotation number of 500 rpm for 40 hours (mechanical milling) to provide a slurry, which was dried in vacuum at room temperature, and heated to 80°C, so as to provide powder (amorphous solid electrolyte (C1)).

The resulting powder was confirmed to be an amorphous solid electrolyte by an X-ray diffractometry (XRD).

Crystallization Step

The entire amount of the resulting amorphous sulfide solid electrolyte (C1) was heated to 195°C for 2 hours with a hot plate in a glove box having an argon atmosphere.

Thereafter, the solid electrolyte was gradually cooled, and pulverized with a mortar in a glove box having an argon atmosphere, so as to provide powder (sulfide solid electrolyte glass ceramics (C1)).

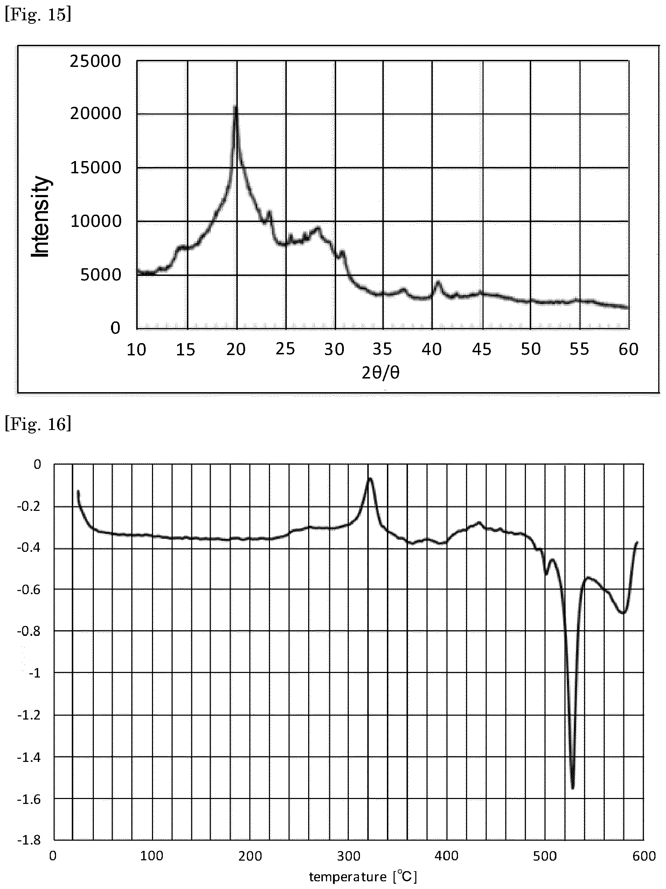

In the X-ray diffractometry (XRD) of the resulting powder (Fig. 15), peaks derived from the crystal structure similar to the thio-LISICON Region II-type crystal structure were observed, from which it was confirmed that the sulfide solid electrolyte glass ceramics (C1) were formed.

The result of the differential thermal analysis (DTA) of the sulfide solid electrolyte glass ceramics (C1) is shown in Fig. 16.

(Comparative Example 2)

Sulfide solid electrolyte glass ceramics of Comparative Example 2 were obtained in the same manner as above (Comparative Example 1) except that the mechanical milling was performed at 370 rpm with no solvent by using 10 zirconia balls having a diameter of 10 mm (approximately 32 g).

(Example 2)

Heating (Crystallization) Step (First Time)

The entire amount of the solid electrolyte (A1) obtained in the step (A) in Example 1 was heated to 250°C for 3 hours with an electric furnace in a glove box having an argon atmosphere.
Thereafter, the solid electrolyte was gradually cooled, and pulverized with a mortar in a glove box having an argon atmosphere, so as to provide powder (crystalline solid electrolyte (A2)). The result of the X-ray diffractometry (XRD) thereof is shown in Fig. 10.

Step (B)

An amorphous solid electrolyte (B2) was obtained in the same manner as in the step (B) of Example 1 except that 1.035 g of the powder obtained in the heating (crystallization) step (first time) was weighed, to which 0.096 g (0.00209 mol) of $Li_2S$ was added, and 0.369 g (0.00276 mol) of LiI as the lithium halide was added.

Heating (Crystallization) Step (Second Time)

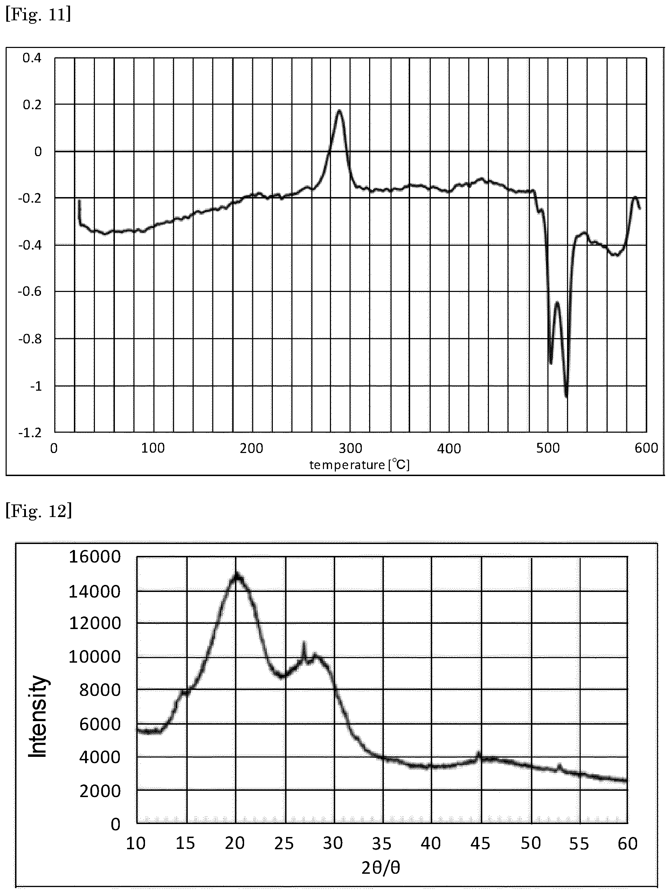

The entire amount of the amorphous solid electrolyte (B2) obtained in the step (B) was heated to 185°C for 2 hours with a hot plate in a glove box having an argon atmosphere.
Thereafter, the solid electrolyte was gradually cooled, and pulverized with a mortar in a glove box having an argon atmosphere, so as to provide powder (sulfide solid electrolyte glass ceramics (2)).
The resulting powder was subjected to an X-ray diffractometry (XRD). As a result of the X-ray diffractometry, peaks derived from the crystal structure similar to the thio-LISICON Region II-type crystal structure were observed at $2\theta = 20.2°$ and $23.6°$, from which it was confirmed that the crystalline solid electrolyte (glass ceramics) was formed.
The result of the differential thermal analysis (DTA) of the sulfide solid electrolyte glass ceramics (2) is shown in Fig. 11.

(Examples 3 to 5)

Sulfide solid electrolyte glass ceramics (3) to (5) of Examples 3 to 5 were obtained in the same manner as above (Example 2) except that the amounts of $Li_2S$ and $P_2S_5$ used in the step (A), the temperature in the heating (crystallization) step (first time) (shown as "heating temperature" in the table), and the amounts of the solid electrolyte (A2) and $Li_2S$ used in the step (B) were changed as shown in Table 4 below.

Table 4

| | Step (A) | | | Step (B) | |
|---|---|---|---|---|---|
| | $Li_2S$ | $P_2S_5$ | Heating temperature | Electrolyte A2 | $Li_2S$ |
| Example 3 | 0.443 (g) | 1.057 (g) | 250 (°C) | 0.991 (g) | 0.140 (g) |
| | 0.00964 (mol) | 0.00476 (mol) | | | 0.00305 (mol) |
| Example 4 | 0.488 (g) | 1.012 (g) | 300 (°C) | 1.035 (g) | 0.096 (g) |
| | 0.01062 (mol) | 0.00455 (mol) | | | 0.00209 (mol) |
| Example 5 | 0.521 (g) | 0.979 (g) | 300 (°C) | 1.069 (g) | 0.062 (g) |
| | 0.01134 (mol) | 0.00440 (mol) | | | 0.00135 (mol) |

(Reference Example)

Step (A)

An amorphous solid electrolyte (A4) was obtained in the same manner as in Example 1 (Step A) except that 0.416 g (0.00905 mol) of $Li_2S$ and 1.084 g (0.00488 mol) of $P_2S_5$ were used.

Step (B)

An amorphous solid electrolyte (B4) was obtained in the same manner as in the step (B) of Example 1 except that 0.966 g of the amorphous solid electrolyte (A4) obtained in the step (A) was weighed, to which 0.165 g (0.00359 mol) of $Li_2S$ was added, and 0.369 g (0.00276 mol) of LiI as the lithium halide was added.

Heating (Crystallization) Step

The entire amount of the amorphous solid electrolyte (B4) obtained in the step (B) was heated to 180°C for 2 hours with a hot plate in a glove box having an argon atmosphere.
Thereafter, the solid electrolyte was gradually cooled, and pulverized with a mortar in a glove box having an argon atmosphere, so as to provide powder (sulfide solid electrolyte glass ceramics (Reference Example)).
In the X-ray diffractometry (XRD) of the resulting powder, peaks derived from the crystal structure similar to the thio-LISICON Region II-type crystal structure were observed, from which it was confirmed that the crystalline solid electrolyte (glass ceramics) was formed.

(Example 6)

Step (B)

An amorphous solid electrolyte (B6) was obtained in the same manner as in Example 2 except that 1.051 g of the powder obtained in the heating (crystallization) step (first time) of Example 2 was weighed, to which 0.098 g (0.00213 mol) of $Li_2S$ was added, and 0.213 g (0.00159 mol) of LiI and 0.138 g (86.845 g/mol, 0.00159 mol) of LiBr as the lithium halide were added. The result of the X-ray diffractometry (XRD) thereof is shown in Fig. 12.

Heating (Crystallization) Step (Second Time)

The entire amount of the amorphous solid electrolyte (B6) obtained in the step (B) was heated to 175°C for 2 hours with a hot plate in a glove box having an argon atmosphere.
Thereafter, the solid electrolyte was gradually cooled, and pulverized with a mortar in a glove box having an argon atmosphere, so as to provide powder (sulfide solid electrolyte glass ceramics (6)).
The resulting powder was subjected to an X-ray diffractometry (XRD) (Fig. 13). As a result of the X-ray diffractometry, peaks derived from the crystal structure similar to the thio-LISICON Region II-type crystal structure were observed at $2\theta = 20.2°$ and $23.6°$, from which it was confirmed that the crystalline solid electrolyte (glass ceramics) was formed. The result of the differential thermal analysis (DTA) thereof is shown in Fig. 14.

(Example 7)

Sulfide solid electrolyte glass ceramics (7) were obtained in the same manner as in Example 4 except that 0.987 g of the powder obtained in the heating (crystallization) step (first time) of Example 4 was weighed, to which 0.092 g (0.00200 mol) of $Li_2S$ was added, and 0.214 g (0.00160 mol) of LiI and 0.208 g (0.00240 mol) of LiBr as the lithium halide were added.

(Comparative Example 3)

An amorphous sulfide solid electrolyte (C2) was obtained in the same manner as in Comparative Example 1 except that 0.440 g (0.00958 mol) of $Li_2S$, 0.709 g (0.00319 mol) of $P_2S_5$, 0.213 g (0.00159 mol) of LiI, and 0.138 g (0.00159 mol) of LiBr were added.

Crystallization Step

The entire amount of the amorphous sulfide solid electrolyte (C2) was heated to 203°C for 2 hours with a hot plate in a glove box having an argon atmosphere.

Thereafter, the solid electrolyte was gradually cooled, and pulverized with a mortar in a glove box having an argon atmosphere, so as to provide powder (sulfide solid electrolyte glass ceramics (C3)).

In the X-ray diffractometry (XRD) of the resulting powder, peaks derived from the crystal structure similar to the thio-LISICON Region II-type crystal structure were observed, from which it was confirmed that the crystalline solid electrolyte (glass ceramics) was formed.

The result of the differential thermal analysis (DTA) of the sulfide solid electrolyte glass ceramics (C3) is shown in Fig. 17.

(Comparative Example 4)

An amorphous sulfide solid electrolyte (C2) was obtained in the same manner as in Comparative Example 2 except that 0.440 g (0.00958 mol) of $Li_2S$, 0.709 g (0.00319 mol) of $P_2S_5$, 0.213 g (0.00159 mol) of LiI, and 0.138 g (0.00159 mol) of LiBr were added, and the mechanical milling was performed without the use of a solvent.

(Comparative Example 5)

In a reaction vessel having a capacity of 40 L equipped with an agitation impeller (anchor impeller), 25.5 L of cyclohexane, 440 g of $Li_2S$, 709 g of $P_2S_5$, 139 g of LiBr, 213 g of LiI, and 3.3 L of tetramethylethylenediamine (TMEDA) as a polar solvent were sequentially charged under a nitrogen atmosphere, and continuously agitated and mixed at an agitation rotation number of 80 rpm for 12 days.

Subsequently, the reaction vessel was connected to a bead mill equipped with a circulation pump (Starmill LME4, a trade name, available from Ashizawa Finetech Ltd., filled with 8.7 kg of zirconia beads having a diameter of 0.5 mm), and pulverization and mixing were performed at a pump flow rate of 2 L/min and a bead mill peripheral speed of 12 m/sec for 4 hours to provide a slurry containing the electrolyte precursor and the polar solvent.

The slurry charged in the reaction tank was reacted in such a manner that the slurry was circulated at a flow rate of 600 mL/min with the pump of the bead mill equipment, the bead mill was started to operate at a peripheral speed of 10 m/s, the peripheral speed of the bead mill was changed to 12 m/s, hot water (HW) was allowed to flow by external circulation, and the temperature at the discharge port of the pump was retained to 70°C. Subsequently, the slurry after the reaction was collected to a 5 L Schlenk flask, dried at room temperature, then heated to 110°C under reduced pressure to remove the complexing agent contained in the electrolyte precursor, so as to provide an amorphous solid electrolyte.

Subsequently, 1 g of the resulting amorphous sulfide solid electrolyte heated to 180°C for 2 hours with a hot plate in a glove box having an argon atmosphere, so as to provide sulfide solid electrolyte glass ceramics (C5).

(Comparative Example 6)

Sulfide solid electrolyte glass ceramics (C6) were obtained with reference to the description of Example 8 of PTL 3.

(Comparative Example 7)

Sulfide solid electrolyte glass ceramics (C7) were obtained with reference to the description of Example 1 of PTL 2.

For comparing with the sulfide solid electrolyte glass ceramics (7) obtained in Example 7, the amounts of $Li_2S$, $P_2S_5$, LiI, and LiBr were adapted to Example 7.

While omitting detailed descriptions except for Example 1 for avoiding duplication, the crystallite diameter, the $P_2S_6^{4-}$ phosphorus proportion, the temperature and the heat quantity of the exothermic peak in the differential thermal analysis (DTA), the ratio $I_{Li2S}/I_{P2S5}$, the conductivity, and the $H_2S$ generating amount of the sulfide solid electrolyte glass ceramics obtained in Examples and Comparative Examples were evaluated in the same manner as in Example 1 (Tables 5 and 6). Comparative Examples 1 and 2 correspond to Example 1, Comparative Examples 3 to 6 correspond to Example 6, and Comparative Example 7 corresponds to Example 7.

The $D_{50}$ and the irreversible capacity of the sulfide solid electrolyte glass ceramics obtained in Examples 2 and 6 and Comparative Examples 1, 2, 4, and 7 are shown in Table 7.

Table 5

| Solid electrolyte | (A) NMR $P_2S_7^{4-}$ Phosphorus proportion % by mol | (B) or (C) NMR $P_2S_6^{4-}$ Phosphorus proportion % by mol | DTA Exothermic peak appearing first at 130°C or more Temperature °C | DTA Full width at half maximum °C | XRD Crystallite diameter nm | DTA Exothermic peak at 350°C or less Temperature °C | DTA Heat quantity W/g | Crystallization temperature Temperature °C | Sulfide solid electrolyte glass ceramics NMR $P_2S_6^{4-}$ Phosphorus proportion % by mol | ICP $I_{Li2S}/I_{P2S5}$ | Conductivity mS/cm | $H_2S$ generating amount cc/g |
|---|---|---|---|---|---|---|---|---|---|---|---|---|
| Example 1 | 40.0 | 6.7 | 195.0 | 6.2 | 37 | 277 | 0.44 | 180°C | 1.9 | 2.99 | 5.1 | 2.2 |
| Comparative Example 1 | - | 16.0 | 195.6 | 10.9 | 26 | 322 | 0.25 | 195°C | 7.4 | 2.93 | 4.0 | 2.7 |
| Comparative Example 2 | - | 13.5 | 198.9 | 6.2 | 23 | 268 | 0.45 | 195°C | 5.6 | 2.96 | 4.9 | - |
| Example 2 | 59.2 | 1.9 | 200.3 | 4.4 | 125 | 290 | 0.31 | 185°C | 0.0 | 3.01 | 6.1 | - |
| Example 3 | 35.4 | 4.0 | 199.4 | 5.7 | 111 | - | - | 185°C | 1.5 | 3.02 | 7.3 | - |
| Example 4 | 35.8 | - | 200.3 | 5.0 | 94 | - | - | 180°C | 0.0 | 2.98 | 7.7 | - |
| Example 5 | 21.7 | - | 199.0 | 5.4 | 113 | - | - | 175°C | 0.0 | 2.99 | 7.5 | - |
| Reference Example | 47.4 | 11.0 | 195.0 | 6.2 | 38 | - | - | 180°C | 5.3 | 3.00 | 4.9 | - |

Table 6

| Solid electrolyte | (A) | (B) or (C) | | | Sulfide solid electrolyte glass ceramics | | | | | | | |
|---|---|---|---|---|---|---|---|---|---|---|---|---|
| Evaluation item | NMR | NMR | DTA | | XRD | DTA | | Crystallization temperature | NMR | ICP | Conductivity | $H_2S$ generating amount |
| | $P_2S_7^{4-}$ Phosphorus proportion | $P_2S_6^{4-}$ Phosphorus proportion | Exothermic peak appearing first at 130°C or more | | Crystallite diameter | Exothermic peak at 350°C or less | | | $P_2S_6^{4-}$ Phosphorus proportion | | | |
| | % by mol | % by mol | Temperature | Full width at half maximum | nm | Temperature | Heat quantity | Temperature | % by mol | $I_{Li2S}/I_{P2S5}$ | mS/cm | cc/g |
| | | | °C | °C | | °C | W/g | °C | | | | |
| Example 6 | 59.2 | 2.9 | 195 | 5.8 | 35 | 257 | 0.56 | 175°C | 0.5 | 2.99 | 6.2 | 2.3 |
| Comparative Example 3 | - | 11.6 | 188.8 | 8.0 | 22 | 264 | 0.66 | 203°C | 5.6 | 3.01 | 5.4 | 2.6 |
| Comparative Example 4 | - | 14.2 | 190.7 | 6.8 | 23 | - | - | 195°C | 4.8 | 3.04 | 5.3 | - |
| Comparative Example 5 | - | 6.3 | 154.5 | 8.6 | 31 | 289 | 0.13 | 180°C | 4.8 | 3.06 | 4.4 | - |
| Comparative Example 6 | - | - | - | - | 27 | - | - | 180°C | 0.0 | 3.09 | 4.3 | - |
| Example 7 | 35.8 | - | 182.3 | 5.0 | 31 | - | - | 168°C | 1.1 | 2.99 | 6.8 | - |
| Comparative Example 7 | - | 10.0 | 175.8 | 14.3 | 27 | - | - | 220°C | 8.3 | 2.94 | 2.2 | - |

Table 7

|  | $D_{50}$ | Irreversible capacity |
|---|---|---|
|  | μm | mAh/g |
| Example 2 | 10.7 | 27 |
| Example 6 | 10.3 | 43 |
| Comparative Example 1 | 5.0 | 63 |
| Comparative Example 2 | 15.1 | 42 |
| Comparative Example 4 | 11.6 | 49 |

It was found that the sulfide solid electrolyte glass ceramics (C1) and (C2) of Comparative Examples 1 and 2 having a smaller crystallite diameter and a larger $P_2S_6^{4-}$ phosphorus proportion had a smaller ionic conductivity, as compared to the sulfide solid electrolyte glass ceramics (1) of Examples 1 and 2. It was confirmed that Comparative Example 1 exhibited a larger generating amount of $H_2S$, as compared to Example 1 (Table 5).

The sulfide solid electrolyte glass ceramics (2) to (5) of Examples 2 to 5 were different from the sulfide solid electrolyte glass ceramics (1) of Example 1 in the heating temperature of the raw materials and the amounts thereof used, and it was confirmed that these sulfide solid electrolyte glass ceramics also had excellent characteristics as similar to the sulfide solid electrolyte glass ceramics (1) of Example 1 (Table 5).

Reference Example was an example of sulfide solid electrolyte glass ceramics having a large $P_2S_6^{4-}$ phosphorus proportion, and it was confirmed that the increase of the $P_2S_6^{4-}$ phosphorus proportion decreased the ionic conductivity.

As shown in Table 6, Comparative Examples 3 to 6 were common to Example 6 in the raw materials used. The sulfide solid electrolyte glass ceramics (C3) of Comparative Example 3 had a small crystallite diameter, but had a large $P_2S_6^{4-}$ phosphorus proportion, resulting in a low ionic conductivity and a deteriorated $H_2S$ generating amount. Comparative Examples 5 and 6 corresponded to sulfide solid electrolyte glass ceramics produced with reference to the production method described in PTL 3, and had room for improvement in ionic conductivity.

As shown in Table 6, Comparative Example 7 provided the sulfide solid electrolyte glass ceramics (C7) corresponding to the solid electrolyte described in PTL 2, and had a low ionic conductivity, as compared to the sulfide solid electrolyte glass ceramics (7) of Example 7 corresponding thereto.

Table 7 summarizes the relationship of the irreversible capacity and the average particle diameter ($D_{50}$) of the sulfide solid electrolyte glass ceramics of Examples 2 and 6 and Comparative Examples 1, 2, and 4. It was confirmed that the result of Example 2 was improved, as compared to Comparative Examples 1 and 2. It was also confirmed that the result of Example 6 was improved, as compared to Comparative Example 4. It was confirmed that the decrease of $P_2S_6^{4-}$ phosphorus proportion improved the irreversible capacity, and it was also confirmed that this tendency was applicable to the other Examples, Comparative Examples, and Reference Example. It is assumed that the irreversible capacity was improved by reducing the $P_2S_6^{4-}$ phosphorus proportion, which traps Li ions and accelerates battery degradation.

Industrial Applicability

According to the present embodiment, a crystalline sulfide solid electrolyte that has a high ionic conductivity and is excellent in battery characteristics can be produced. The crystalline sulfide solid electrolyte obtained by the production method of the present embodiment can be favorably applied to batteries, especially batteries for information-related instruments, and communication instruments, such as a personal computer, a video camera, and a mobile phone.

**Claims**

1. Sulfide solid electrolyte glass ceramics that have peaks at 20.2° and 23.6° in an X-ray diffractometry (XRD) using the CuKo line, a crystallite diameter of 30 nm or more, and a $P_2S_6^{4-}$ phosphorus proportion obtained by a solid $^{31}$P-NMR spectroscopy of 4.5% by mol or less.

2. The sulfide solid electrolyte glass ceramics according to claim 1, wherein the sulfide solid electrolyte glass ceramics have only one exothermic peak having an intensity of 0.15 W/g or more at 310°C or less in a differential thermal analysis (DTA).

3. The sulfide solid electrolyte glass ceramics according to claim 1 or 2, wherein the sulfide solid electrolyte glass ceramics have a ratio ($I_{Li2S}/I_{P2S5}$) of a molar fraction ($I_{Li2S}$) of $Li_2S$ and a molar fraction ($I_{P2S5}$) of $P_2S_5$ calculated from elemental ratios measured with an inductively coupled plasma (ICP) emission spectrophotometer of 2.6 or more and 3.3 or less.

4. The sulfide solid electrolyte glass ceramics according to any one of claims 1 to 3, wherein a solid electrolyte (B) as a production intermediate of the sulfide solid electrolyte glass ceramics has a $P_2S_6{}^{4-}$ phosphorus proportion obtained by a solid $^{31}P$-NMR spectroscopy of 15.0% by mol or less.

5. The sulfide solid electrolyte glass ceramics according to any one of claims 1 to 4, wherein a solid electrolyte (B) as a production intermediate of the sulfide solid electrolyte glass ceramics has an exothermic peak appearing first at a temperature of 130°C or more in a temperature rise process in a differential thermal analysis (DTA) that has a full width at half maximum of 8.0°C or less.

6. The sulfide solid electrolyte glass ceramics according to any one of claims 1 to 5, wherein the sulfide solid electrolyte glass ceramics contain a lithium atom, a phosphorus atom, a sulfur atom, and a halogen atom.

7. The sulfide solid electrolyte glass ceramics according to claim 6, wherein the halogen atom is at least one kind selected from a chlorine atom, a bromine atom, and an iodine atom.

8. A method of producing the sulfide solid electrolyte glass ceramics according to any one of claims 1 to 7, comprising

   a step (A) of treating $Li_2S$ and $P_2S_5$ by at least one kind selected from agitation, mixing, and pulverization, so as to provide a solid electrolyte (A), and
   a step (B) of treating the solid electrolyte (A), $Li_2S$, and a lithium halide by at least one kind selected from agitation, mixing, and pulverization, so as to provide a solid electrolyte (B).

9. The method of producing the sulfide solid electrolyte glass ceramics according to claim 8, wherein the solid electrolyte (A) contains $Li_4P_2S_7$, and the solid electrolyte (A) has a $P_2S_7{}^{4-}$ phosphorus proportion measured by $^{31}P$-NMR spectroscopy of 20.0% by mol or more.

10. The method of producing the sulfide solid electrolyte glass ceramics according to claim 8 or 9, wherein the solid electrolyte (B) has $PS_4{}^{3-}$ as a major skeleton.

11. The method of producing the sulfide solid electrolyte glass ceramics according to any one of claims 8 to 10, wherein the method further comprises heating the solid electrolyte (B).

12. The method of producing the sulfide solid electrolyte glass ceramics according to claim 11, wherein the solid electrolyte (B) is heated to a temperature that is lower by 5 to 30°C than a peak top temperature of an exothermic peak observed on the lowest temperature side at 130°C or more in a DTA measurement of the solid electrolyte (B).

13. The method of producing the sulfide solid electrolyte glass ceramics according to any one of claims 8 to 12, wherein the method further comprises heating the solid electrolyte (A).

14. A battery comprising the sulfide solid electrolyte glass ceramics according to any one of claims 1 to 7.

[Fig. 1]

Step (A)
$$Li_2S + P_2S_5$$
Treatment $\longrightarrow$ Solid electrolyte (A)

Step (B)  Solid electrolyte (A) + $Li_2S$ Lithium halide  Treatment $\longrightarrow$ Solid electrolyte (B)

[Fig. 2]

Setting base line

[Fig. 3]

[Fig. 4]

[Fig. 5]

[Fig. 6]

[Fig. 7]

[Fig. 8]

[Fig. 9]

[Fig. 10]

[Fig. 11]

[Fig. 12]

[Fig. 13]

[Fig. 14]

[Fig. 15]

[Fig. 16]

[Fig. 17]

[Fig. 18]

[Fig. 19]

<div align="center">

**INTERNATIONAL SEARCH REPORT**

</div>

| International application No. |
|---|
| **PCT/JP2021/037459** |

| A. | CLASSIFICATION OF SUBJECT MATTER |
|---|---|

*C03C 10/02*(2006.01)i; *H01B 3/12*(2006.01)i; *H01M 10/0562*(2010.01)i; *H01B 1/10*(2006.01)i
FI:   H01B1/10; H01M10/0562; H01B3/12 331; C03C10/02

According to International Patent Classification (IPC) or to both national classification and IPC

| B. | FIELDS SEARCHED |
|---|---|

Minimum documentation searched (classification system followed by classification symbols)

C03C10/02; H01B3/12; H01M10/0562; H01B1/10

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | JP 2019-200856 A (SAMSUNG ELECTRONICS CO., LTD.) 21 November 2019 (2019-11-21) | 1-14 |
| A | WO 2018/225526 A1 (IDEMITSU KOSAN CO., LTD.) 13 December 2018 (2018-12-13) | 1-14 |

☐ Further documents are listed in the continuation of Box C.    ☑ See patent family annex.

| | |
|---|---|
| *    Special categories of cited documents: | "T"   later document published after the international filing date or priority date and not in conflict with the application but cited to understand the principle or theory underlying the invention |
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
|---|---|
| **06 December 2021** | **21 December 2021** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2021/037459**

| Patent document cited in search report | | | Publication date (day/month/year) | Patent family member(s) | | | Publication date (day/month/year) |
|---|---|---|---|---|---|---|---|
| JP | 2019-200856 | A | 21 November 2019 | US | 2019/0348707 | A1 | |
| | | | | KR | 10-2019-0130449 | A | |
| WO | 2018/225526 | A1 | 13 December 2018 | US | 2021/0075056 | A1 | |
| | | | | EP | 3637442 | A1 | |
| | | | | CN | 110709950 | A | |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2014089971 A
- JP 2019200851 A
- WO 2020105737 A
- WO 2018225526 A
- JP 2013016423 A

### Non-patent literature cited in the description

- **KANNO et al.** *Journal of The Electrochemical Society,* 2001, vol. 148 (7), A742-746
- *Solid State Ionics,* 2006, vol. 177, 2721-2725